(19)

Europäisches
Patentamt
European
Patent Office
Office européen
des brevets

(11) **EP 3 627 836 A1**

(12) **EUROPEAN PATENT APPLICATION**
published in accordance with Art. 153(4) EPC

(43) Date of publication:
**25.03.2020 Bulletin 2020/13**

(21) Application number: **18821371.4**

(22) Date of filing: **11.05.2018**

(51) Int Cl.:
*H04N 19/11* (2014.01)     *H04N 19/593* (2014.01)
*H04N 19/105* (2014.01)    *H04N 19/176* (2014.01)
*H04N 19/70* (2014.01)

(86) International application number:
**PCT/KR2018/005438**

(87) International publication number:
**WO 2018/236051 (27.12.2018 Gazette 2018/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2017 US 201762522715 P
21.06.2017 US 201762522714 P**

(71) Applicant: **LG Electronics Inc.
Seoul 07336 (KR)**

(72) Inventors:
• **JANG, Hyeongmoon**
  **Seoul 06772 (KR)**
• **KIM, Seunghwan**
  **Seoul 06772 (KR)**
• **LIM, Jaehyun**
  **Seoul 06772 (KR)**

(74) Representative: **Maikowski & Ninnemann
Patentanwälte Partnerschaft mbB
Postfach 15 09 20
10671 Berlin (DE)**

(54) **METHOD AND DEVICE FOR DECODING IMAGE ACCORDING TO INTRA-PREDICTION IN IMAGE CODING SYSTEM**

(57)     An intra-prediction method performed by a decoding device, according to the present disclosure, comprises the steps of: deriving an intra-prediction mode for a current block; deriving reference samples of the current block; determining whether a PDPC or UWP for the current block is performed; deriving weights for target sample of the current block when the UWP is performed on the current block; deriving reference samples of the target sample, according to the intra-prediction mode, among the reference samples; and deriving a prediction sample of the target sample by performing weighted sum for the reference samples of the target samples on the basis of the weights.

FIG. 12

EP 3 627 836 A1

**Description**

**BACKGROUND OF THE DISCLOSURE**

Field of the disclosure

The present disclosure relates to a video coding technique, and more particularly, to a video decoding method and device based on intra prediction in an image coding system.

Related Art

Demand for high-resolution, high-quality images such as High Definition (HD) images and Ultra High Definition (UHD) images have been increasing in various fields. As the image data has high resolution and high quality, the amount of information or bits to be transmitted increases relative to the legacy image data. Therefore, when image data is transmitted using a medium such as a conventional wired/wireless broadband line or image data is stored using an existing storage medium, the transmission cost and the storage cost thereof are increased.

Accordingly, there is a need for a highly efficient image compression technique for effectively transmitting, storing, and reproducing information of high resolution and high quality images.

**SUMMARY**

A technical object of the present disclosure is to provide a method and device that can enhance image coding efficiency.

Another technical object of the present disclosure is to provide an intra prediction method and apparatus that generates a weight of a target sample for performing Un-equal Weight Prediction (UWP) based on a position of the target sample and a mathematical equation for the target sample.

Still another object of the present disclosure is to provide an intra prediction method and apparatus that performs intra prediction of a current block by applying Un-equal Weight Prediction (UWP) or Position Dependent intra Prediction Combination (PDPC) selectively.

According to one embodiment of the present disclosure, an intra prediction method performed by a decoding apparatus is provided. The method comprises deriving an intra prediction mode for a current block; deriving reference samples of the current block; determining whether Position Dependent intra Prediction Combination (PDPC) or Un-equal Weight Prediction (UWP) of the current block is performed; deriving weights for a target sample of the current block when the UWP is performed on the current block; deriving reference samples of the target sample among the reference samples according to the intra prediction mode; and deriving a prediction sample of the target sample by a weighted sum of the reference samples of the target sample based on the weights.

According to another embodiment of the present disclosure, a decoding apparatus that performs intra prediction is provided. The decoding apparatus comprises an entropy decoder for obtaining prediction information about a current block; and a predictor for deriving an intra prediction mode for the current block, for deriving reference samples of the current block, for determining whether Position Dependent intra Prediction Combination (PDPC) or Un-equal Weight Prediction (UWP) of the current block is performed, for deriving weights for a target sample of the current block when the UWP is performed on the current block, for deriving reference samples of the target sample among the reference samples according to the intra prediction mode, and for deriving a prediction sample of the target sample by a weighted sum of the reference samples of the target sample based on the weights.

According to yet another embodiment of the present disclosure, an intra prediction method performed by an encoding apparatus is provided. The method comprises determining an intra prediction mode for a current block; deriving reference samples of the current block; determining whether Position Dependent intra Prediction Combination (PDPC) or Un-equal Weight Prediction (UWP) of the current block is performed; deriving weights for a target sample of the current block when the UWP is performed on the current block; deriving reference samples of the target sample among the reference samples according to the intra prediction mode; deriving a prediction sample of the target sample by a weighted sum of the reference samples of the target sample based on the weights; and generating prediction information for the current block, encoding the generated prediction information, and outputting the encoded prediction information.

According to still another embodiment of the present disclosure, a video encoding apparatus is provided. The encoding apparatus comprises a predictor for determining an intra prediction mode for a current block, for deriving reference samples of the current block, for determining whether Position Dependent intra Prediction Combination (PDPC) or Un-equal Weight Prediction (UWP) of the current block is performed, for deriving weights for a target sample of the current block when the UWP is performed on the current block, for deriving reference samples of the target sample among the reference samples according to the intra prediction mode, and for deriving a prediction sample of the target sample by a weighted sum of the reference samples of the target sample based on the weights; and an entropy encoder for generating prediction information for the current block, for encoding the generated prediction information, and for outputting the encoded prediction information.

According to the present disclosure, weights for intra prediction may be generated based on the position of a target sample, which reduces the amount of memory used for storing a table for generating weights.

According to the present disclosure, intra prediction that applies UWP and PDPC selectively based on a specific condition may be performed, which improves intra prediction efficiency and the overall coding efficiency.

## BRIEF DESCRIPTION OF THE DRAWINGS

FIG. 1 is a schematic diagram illustrating a configuration of a video encoding apparatus to which the present disclosure is applicable.

FIG. 2 is a schematic diagram illustrating a configuration of a video decoding apparatus to which the present disclosure is applicable.

FIG. 3 illustrates the left neighboring samples and the upper neighboring samples used for intra prediction of the current block.

FIG. 4 illustrates intra prediction modes of 65 prediction directions.

FIG. 5 illustrates one example of intra prediction performed by applying the UWP to the current block.

FIG. 6 illustrates one example of deriving weights of reference samples for a target sample of the current block.

FIG. 7 illustrates one example of intra prediction performed by applying the PDPC to the current block.

FIG. 8 illustrates one example of intra prediction performed by applying the UWP and the PDCP selectively.

FIG. 9 illustrates one example of intra prediction performed by applying the UWP and the PDPC selectively.

FIG. 10 illustrates one example of intra prediction performed by applying the UWP and the PDPC selectively.

FIG. 11 illustrates a video encoding method by an encoding apparatus according to the present disclosure.

FIG. 12 illustrates a video decoding method by a decoding apparatus according to the present disclosure.

## DESCRIPTION OF EXEMPLARY EMBODIMENTS

The present disclosure may be modified in various forms, and specific embodiments thereof will be described and illustrated in the drawings. However, the embodiments are not intended for limiting the disclosure. The terms used in the following description are used to merely describe specific embodiments, but are not intended to limit the disclosure. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

On the other hand, elements in the drawings described in the disclosure are independently drawn for the purpose of convenience for explanation of different specific functions, and do not mean that the elements are embodied by independent hardware or independent software. For example, two or more elements of the elements may be combined to form a single element, or one element may be divided into plural elements. The embodiments in which the elements are combined and/or divided belong to the disclosure without departing from the concept of the disclosure.

Hereinafter, embodiments of the present disclosure will be described in detail with reference to the accompanying drawings. In addition, like reference numerals are used to indicate like elements throughout the drawings, and the same descriptions on the like elements will be omitted.

In the present specification, generally a picture means a unit representing an image at a specific time, a slice is a unit constituting a part of the picture. One picture may be composed of plural slices, and the terms of a picture and a slice may be mixed with each other as occasion demands.

A pixel or a pel may mean a minimum unit constituting one picture (or image). Further, a "sample" may be used as a term corresponding to a pixel. The sample may generally represent a pixel or a value of a pixel, may represent only a pixel (a pixel value) of a luma component, and may represent only a pixel (a pixel value) of a chroma component.

A unit indicates a basic unit of image processing. The unit may include at least one of a specific area and information related to the area. Optionally, the unit may be mixed with terms such as a block, an area, or the like. In a typical case, an M×N block may represent a set of samples or transform coefficients arranged in M columns and N rows.

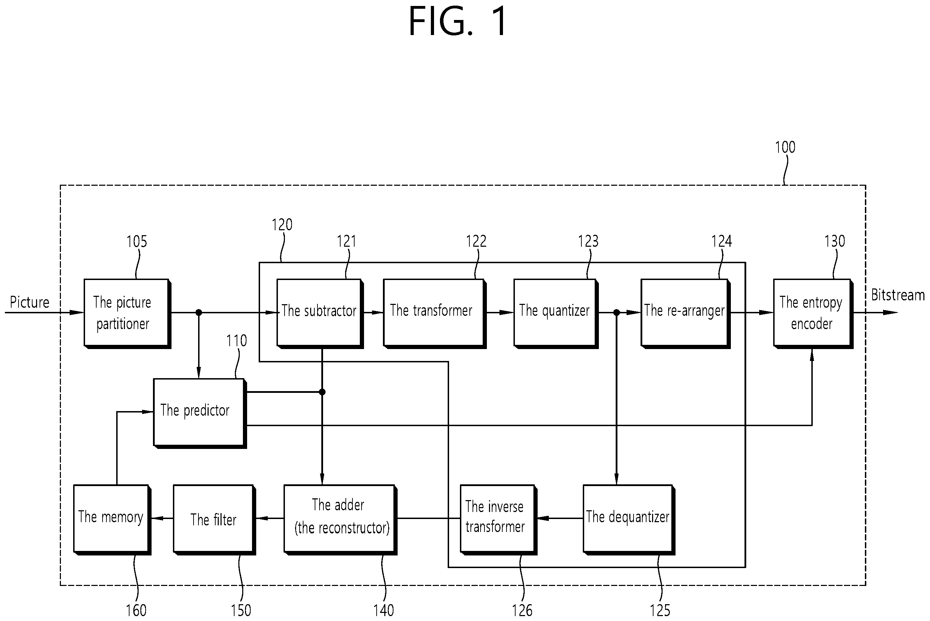

FIG. 1 briefly illustrates a structure of a video encoding apparatus to which the present disclosure is applicable.

Referring to FIG. 1, a video encoding apparatus 100 may include a picture partitioner 105, a predictor 110, a residual processor 120, an entropy encoder 130, an adder 140, a filter 150, and a memory 160. The residual processor 120 may include a subtractor 121, a transformer 122, a quantizer 123, a re-arranger 124, a dequantizer 125, an inverse transformer 126.

The picture partitioner 105 may split an input picture into at least one processing unit.

In an example, the processing unit may be referred to as a coding unit (CU). In this case, the coding unit may be recursively split from the largest coding unit (LCU) according to a quad-tree binary-tree (QTBT) structure. For example, one coding unit may be split into a plurality of coding units of a deeper depth based on a quadtree structure and/or a binary tree structure. In this case, for example, the quad tree structure may be first applied and the binary tree structure may be applied later. Alternatively, the binary tree structure may be applied first. The coding procedure according to the present disclosure may be performed based on a final coding unit which is not split any further. In this case, the largest coding unit may be used as the final coding unit based on coding efficiency, or the like, depending on image characteristics, or the coding unit may be recursively split into coding units of a lower depth as necessary and a coding unit having an optimal size may be used as the final coding unit. Here, the coding procedure may include a procedure such as prediction, transformation, and reconstruction, which will be described later.

In another example, the processing unit may include a coding unit (CU) prediction unit (PU), or a transform unit (TU). The coding unit may be split from the largest coding unit (LCU) into coding units of a deeper depth according to the quad tree structure. In this case, the largest coding unit may be directly used as the final coding unit based on the coding efficiency, or the like, depending on the image characteristics, or the coding unit may be recursively split into coding units of a deeper depth as necessary and a coding unit having an optimal size may be used as a final coding unit. When the smallest coding unit (SCU) is set, the coding unit may not be split into coding units smaller than the smallest coding unit. Here, the final coding unit refers to a coding unit which is partitioned or split to a prediction unit or a transform unit. The prediction unit is a unit which is partitioned from a coding unit, and may be a unit of sample prediction. Here, the prediction unit may be divided into sub-blocks. The transform unit may be divided from the coding unit according to the quad-tree structure and may be a unit for deriving a transform coefficient and/or a unit for deriving a residual signal from the transform coefficient. Hereinafter, the coding unit may be referred to as a coding block (CB), the prediction unit may be referred to as a prediction block (PB), and the transform unit may be referred to as a transform block (TB). The prediction block or prediction unit may refer to a specific area in the form of a block in a picture and include an array of prediction samples. Also, the transform block or transform unit may refer to a specific area in the form of a block in a picture and include the transform coefficient or an array of residual samples.

The predictor 110 may perform prediction on a processing target block (hereinafter, a current block), and may generate a predicted block including prediction samples for the current block. A unit of prediction performed in the predictor 110 may be a coding block, or may be a transform block, or may be a prediction block.

The predictor 110 may determine whether intra prediction is applied or inter-prediction is applied to the current block. For example, the predictor 110 may determine whether the intra prediction or the inter-prediction is applied in unit of CU.

In case of the intra prediction, the predictor 110 may derive a prediction sample for the current block based on a reference sample outside the current block in a picture to which the current block belongs (hereinafter, a current picture). In this case, the predictor 110 may derive the prediction sample based on an average or interpolation of neighboring reference samples of the current block (case (i)), or may derive the prediction sample based on a reference sample existing in a specific (prediction) direction as to a prediction sample among the neighboring reference samples of the current block (case (ii)). The case (i) may be called a non-directional mode or a non-angular mode, and the case (ii) may be called a directional mode or an angular mode. In the intra prediction, prediction modes may include as an example 33 directional modes and at least two non-directional modes. The non-directional modes may include DC mode and planar mode. The predictor 110 may determine the prediction mode to be applied to the current block by using the prediction mode applied to the neighboring block.

In case of the inter-prediction, the predictor 110 may derive the prediction sample for the current block based on a sample specified by a motion vector on a reference picture. The predictor 110 may derive the prediction sample for the current block by applying any one of a skip mode, a merge mode, and a motion vector prediction (MVP) mode. In case of the skip mode and the merge mode, the predictor 110 may use motion information of the neighboring block as motion information of the current block. In case of the skip mode, unlike in the merge mode, a difference (residual) between the prediction sample and an original sample is not transmitted. In case of the MVP mode, a motion vector of the neighboring block is used as a motion vector predictor and thus is used as a motion vector predictor of the current block to derive a motion vector of the current block.

In case of the inter-prediction, the neighboring block may include a spatial neighboring block existing in the current picture and a temporal neighboring block existing in the reference picture. The reference picture including the temporal neighboring block may also be called a collocated picture (colPic). Motion information may include the motion vector and a reference picture index. Information such as prediction mode information and motion information may be (entropy) encoded, and then output as a form of a bitstream.

When motion information of a temporal neighboring block is used in the skip mode and the merge mode, a highest picture in a reference picture list may be used as a reference picture. Reference pictures included in the reference picture list may be aligned based on a picture order count (POC) difference between a current picture and a corresponding reference picture. APOC corresponds to a display order and may be discriminated from a coding order.

The subtractor 121 generates a residual sample which is a difference between an original sample and a prediction sample. If the skip mode is applied, the residual sample may not be generated as described above.

The transformer 122 transforms residual samples in units of a transform block to generate a transform coefficient. The transformer 122 may perform transformation based on the size of a corresponding transform block and a prediction mode applied to a coding block or prediction block spatially overlapping with the transform block. For example, residual samples may be transformed using discrete sine transform (DST) transform kernel if intra prediction is applied to the coding block or the prediction block overlapping with the transform block and the transform block is a $4 \times 4$ residual array and is transformed using discrete cosine transform (DCT) transform kernel in other cases.

The quantizer 123 may quantize the transform coefficients to generate quantized transform coefficients.

The re-arranger 124 rearranges quantized transform coefficients. The re-arranger 124 may rearrange the quantized transform coefficients in the form of a block into a one-dimensional vector through a coefficient scanning method. Although the re-arranger 124 is described as a separate component, the re-arranger 124 may be a part of the quantizer 123.

The entropy encoder 130 may perform entropy-encoding on the quantized transform coefficients. The entropy encoding may include an encoding method, for example, an exponential Golomb, a context-adaptive variable length coding (CAVLC), a context-adaptive binary arithmetic coding (CABAC), or the like. The entropy encoder 130 may perform encoding together or separately on information (e.g., a syntax element value or the like) required for video reconstruction in addition to the quantized transform coefficients. The entropy-encoded information may be transmitted or stored in unit of a network abstraction layer (NAL) in a bitstream form.

The dequantizer 125 dequantizes values (transform coefficients) quantized by the quantizer 123 and the inverse transformer 126 inversely transforms values dequantized by the dequantizer 125 to generate a residual sample.

The adder 140 adds a residual sample to a prediction sample to reconstruct a picture. The residual sample may be added to the prediction sample in units of a block to generate a reconstructed block. Although the adder 140 is described as a separate component, the adder 140 may be a part of the predictor 110. Meanwhile, the adder 140 may be referred to as a reconstructor or reconstructed block generator.

The filter 150 may apply deblocking filtering and/or a sample adaptive offset to the reconstructed picture. Artifacts at a block boundary in the reconstructed picture or distortion in quantization may be corrected through deblocking filtering and/or sample adaptive offset. Sample adaptive offset may be applied in units of a sample after deblocking filtering is completed. The filter 150 may apply an adaptive loop filter (ALF) to the reconstructed picture. The ALF may be applied to the reconstructed picture to which deblocking filtering and/or sample adaptive offset has been applied.

The memory 160 may store a reconstructed picture (decoded picture) or information necessary for encoding/decoding. Here, the reconstructed picture may be the reconstructed picture filtered by the filter 150. The stored reconstructed picture may be used as a reference picture for (inter) prediction of other pictures. For example, the memory 160 may store (reference) pictures used for inter-prediction. Here, pictures used for inter-prediction may be designated according to a reference picture set or a reference picture list.

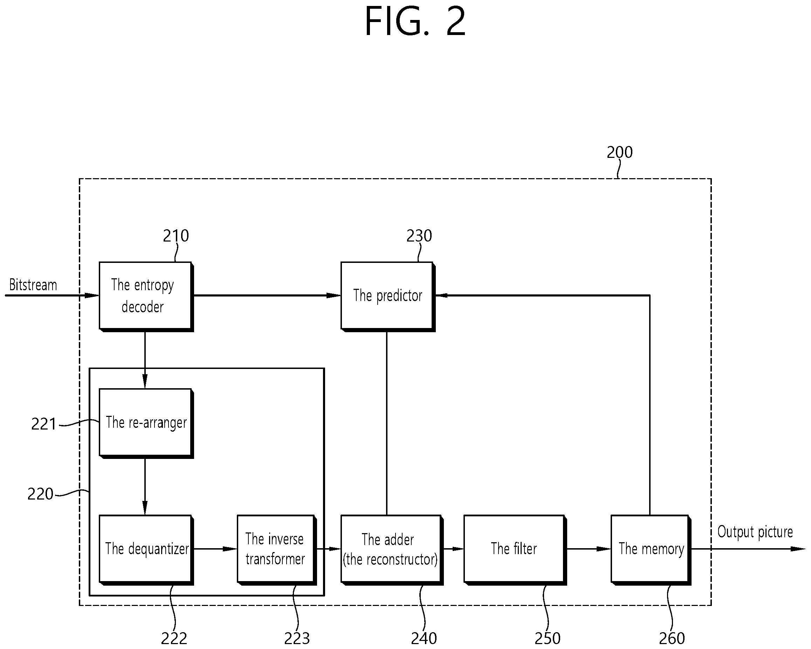

FIG. 2 briefly illustrates a structure of a video decoding apparatus to which the present disclosure is applicable.

Referring to FIG. 2, a video decoding apparatus 200 may include an entropy decoder 210, a residual processor 220, a predictor 230, an adder 240, a filter 250, and a memory 260. The residual processor 220 may include a re-arranger 221, a dequantizer 222, an inverse transformer 223.

When a bitstream including video information is input, the video decoding apparatus 200 may reconstruct a video in association with a process by which video information is processed in the video encoding apparatus.

For example, the video decoding apparatus 200 may perform video decoding using a processing unit applied in the video encoding apparatus. Thus, the processing unit block of video decoding may be, for example, a coding unit and, in another example, a coding unit, a prediction unit or a transform unit. The coding unit may be split from the largest coding unit according to the quad tree structure and/or the binary tree structure.

A prediction unit and a transform unit may be further used in some cases, and in this case, the prediction block is a block derived or partitioned from the coding unit and may be a unit of sample prediction. Here, the prediction unit may be divided into sub-blocks. The transform unit may be split from the coding unit according to the quad tree structure and may be a unit that derives a transform coefficient or a unit that derives a residual signal from the transform coefficient.

The entropy decoder 210 may parse the bitstream to output information required for video reconstruction or picture reconstruction. For example, the entropy decoder 210 may decode information in the bitstream based on a coding method such as exponential Golomb encoding, CAVLC, CABAC, or the like, and may output a value of a syntax element required for video reconstruction and a quantized value of a transform coefficient regarding a residual.

More specifically, a CABAC entropy decoding method may receive a bin corresponding to each syntax element in a bitstream, determine a context model using decoding target syntax element information and decoding information of neighboring and decoding target blocks or information of symbol/bin decoded in a previous step, predict bin generation probability according to the determined context model and perform arithmetic decoding of the bin to generate a symbol corresponding to each syntax element value. Here, the CABAC entropy decoding method may update the context model using information of a symbol/bin decoded for a context model of the next symbol/bin after determination of the context model.

Information about prediction among information decoded in the entropy decoder 210 may be provided to the predictor 250 and residual values, that is, quantized transform coefficients, on which entropy decoding has been performed by the entropy decoder 210 may be input to the re-arranger 221.

The re-arranger 221 may rearrange the quantized transform coefficients into a two-dimensional block form. The re-arranger 221 may perform rearrangement corresponding to coefficient scanning performed by the encoding apparatus. Although the re-arranger 221 is described as a separate component, the re-arranger 221 may be a part of the dequantizer 222.

The dequantizer 222 may de-quantize the quantized transform coefficients based on a (de)quantization parameter to output a transform coefficient. In this case, information for deriving a quantization parameter may be signaled from the encoding apparatus.

The inverse transformer 223 may inverse-transform the transform coefficients to derive residual samples.

The predictor 230 may perform prediction on a current block, and may generate a predicted block including prediction samples for the current block. A unit of prediction performed in the predictor 230 may be a coding block or may be a transform block or may be a prediction block.

The predictor 230 may determine whether to apply intra prediction or inter-prediction based on information on a prediction. In this case, a unit for determining which one will be used between the intra prediction and the inter-prediction may be different from a unit for generating a prediction sample. In addition, a unit for generating the prediction sample may also be different in the inter-prediction and the intra prediction. For example, which one will be applied between the inter-prediction and the intra prediction may be determined in unit of CU. Further, for example, in the inter-prediction, the prediction sample may be generated by determining the prediction mode in unit of PU, and in the intra prediction, the prediction sample may be generated in unit of TU by determining the prediction mode in unit of PU.

In case of the intra prediction, the predictor 230 may derive a prediction sample for a current block based on a neighboring reference sample in a current picture. The predictor 230 may derive the prediction sample for the current block by applying a directional mode or a non-directional mode based on the neighboring reference sample of the current block. In this case, a prediction mode to be applied to the current block may be determined by using an intra prediction mode of a neighboring block.

In the case of inter-prediction, the predictor 230 may derive a prediction sample for a current block based on a sample specified in a reference picture according to a motion vector. The predictor 230 may derive the prediction sample for the current block using one of the skip mode, the merge mode and the MVP mode. Here, motion information required for inter-prediction of the current block provided by the video encoding apparatus, for example, a motion vector and information about a reference picture index may be acquired or derived based on the information about prediction.

In the skip mode and the merge mode, motion information of a neighboring block may be used as motion information of the current block. Here, the neighboring block may include a spatial neighboring block and a temporal neighboring block.

The predictor 230 may construct a merge candidate list using motion information of available neighboring blocks and use information indicated by a merge index on the merge candidate list as a motion vector of the current block. The merge index may be signaled by the encoding apparatus. Motion information may include a motion vector and a reference picture. When motion information of a temporal neighboring block is used in the skip mode and the merge mode, a highest picture in a reference picture list may be used as a reference picture.

In the case of the skip mode, a difference (residual) between a prediction sample and an original sample is not transmitted, distinguished from the merge mode.

In the case of the MVP mode, the motion vector of the current block may be derived using a motion vector of a neighboring block as a motion vector predictor. Here, the neighboring block may include a spatial neighboring block and a temporal neighboring block.

When the merge mode is applied, for example, a merge candidate list may be generated using a motion vector of a reconstructed spatial neighboring block and/or a motion vector corresponding to a Col block which is a temporal neighboring block. A motion vector of a candidate block selected from the merge candidate list is used as the motion vector of the current block in the merge mode. The aforementioned information about prediction may include a merge index indicating a candidate block having the best motion vector selected from candidate blocks included in the merge candidate list. Here, the predictor 230 may derive the motion vector of the current block using the merge index.

When the Motion vector Prediction (MVP) mode is applied as another example, a motion vector predictor candidate list may be generated using a motion vector of a reconstructed spatial neighboring block and/or a motion vector corresponding to a Col block which is a temporal neighboring block. That is, the motion vector of the reconstructed spatial neighboring block and/or the motion vector corresponding to the Col block which is the temporal neighboring block may be used as motion vector candidates. The aforementioned information about prediction may include a prediction motion vector index indicating the best motion vector selected from motion vector candidates included in the list. Here, the predictor 230 may select a prediction motion vector of the current block from the motion vector candidates included in the motion vector candidate list using the motion vector index. The predictor of the encoding apparatus may obtain a motion vector difference (MVD) between the motion vector of the current block and a motion vector predictor, encode the MVD and output the encoded MVD in the form of a bitstream. That is, the MVD may be obtained by subtracting the motion vector predictor from the motion vector of the current block. Here, the predictor 230 may acquire a motion vector included in the information about prediction and derive the motion vector of the current block by adding the motion vector difference to the motion vector predictor. In addition, the predictor may obtain or derive a reference picture index indicating a reference picture from the aforementioned information about prediction.

The adder 240 may add a residual sample to a prediction sample to reconstruct a current block or a current picture. The adder 240 may reconstruct the current picture by adding the residual sample to the prediction sample in units of a block. When the skip mode is applied, a residual is not transmitted and thus the prediction sample may become a reconstructed sample. Although the adder 240 is described as a separate component, the adder 240 may be a part of the predictor 230. Meanwhile, the adder 240 may be referred to as a reconstructor or reconstructed block generator.

The filter 250 may apply deblocking filtering, sample adaptive offset and/or ALF to the reconstructed picture. Here, sample adaptive offset may be applied in units of a sample after deblocking filtering. The ALF may be applied after deblocking filtering and/or application of sample adaptive offset.

The memory 260 may store a reconstructed picture (decoded picture) or information necessary for decoding. Here, the reconstructed picture may be the reconstructed picture filtered by the filter 250. For example, the memory 260 may store pictures used for inter-prediction. Here, the pictures used for inter-prediction may be designated according to a reference picture set or a reference picture list. A reconstructed picture may be used as a reference picture for other pictures. The memory 260 may output reconstructed pictures in an output order.

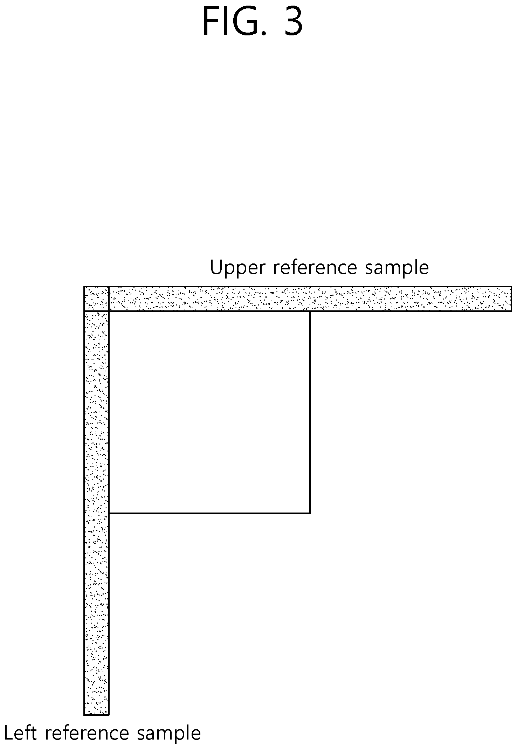

As described above, if prediction is performed on a current block, the prediction may be performed based on an intra prediction mode. For example, the intra prediction may be performed based on reference samples on which encoding/decoding has already been performed when the current block is decoded. In other words, a prediction sample of the current block may be restored by using left reference samples, top-left reference sample, and upper reference samples of the current block already restored. The left reference samples, top-left reference sample, and upper reference samples may be denoted as shown in FIG. 3.

FIG. 3 illustrates the left neighboring samples and the upper neighboring samples used for intra prediction of the current block. The left reference samples, top-left reference sample, and upper reference samples may represent neighboring samples of the current block; if size of the current block is N x N, and the x and y components of the top-left sample of the current block are 0 and 0, the left reference samples may range from p[-1][0] to p[-1][2N-1], the top-left reference sample may be p[-1][-1], and the upper reference samples may range from p[0][-1] to p[2N-1][-1].

In case intra prediction is performed on the current block, an intra prediction mode for the current block may be derived, and a prediction sample for the current block may be generated by using at least one of the left neighboring samples, top-left neighboring sample, and upper neighboring samples according to the intra prediction mode. Here, the intra prediction mode may include two unidirectional intra prediction modes and 33 angular intra prediction modes. The unidirectional intra prediction modes may include a planar intra prediction mode and a DC intra prediction mode; and the angular intra prediction modes may include 2 to 34 intra prediction modes. The planar intra prediction mode may be referred to as a planar mode, and the DC intra prediction mode may be referred to as a DC mode. Also, the 10-th intra prediction mode represents a horizontal intra prediction mode or horizontal mode, and the 26-th intra prediction mode represents a vertical intra prediction mode or vertical mode, with reference to which a prediction direction of the angular intra-mode may be expressed in terms of an angle. In other words, a relative angle of each intra prediction mode may be expressed with reference to the horizontal reference angle of 0 degree that corresponds to the 10-th intra prediction mode, and a relative angle of each intra prediction mode may be expressed with reference to the vertical reference angle of 0 degree that corresponds to the 26-th intra prediction mode.

Also, since the demand for high quality video is increasing, the number of angular intra prediction directions may be increased to 65 to improve efficiency of video codec. In other words, the intra prediction mode may include two unidirectional intra prediction modes and 65 angular intra prediction modes. The unidirectional intra prediction modes may include the planar intra prediction mode and the DC intra prediction mode; and the angular intra prediction modes may include the 2nd to the 66-th intra prediction modes.

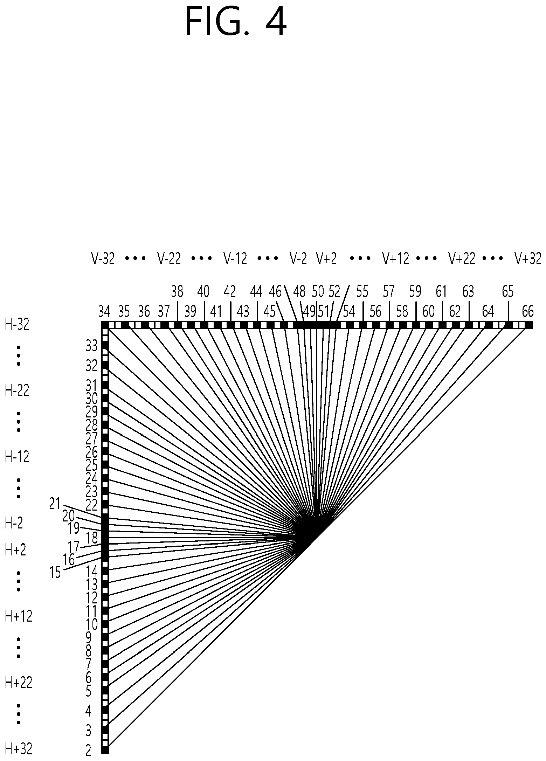

FIG. 4 illustrates intra prediction modes of 65 prediction directions.

Referring to FIG. 4, intra prediction modes having horizontal directionality and intra prediction modes having vertical directionality may be distinguished from each other with reference to the 34-th intra prediction mode along the top-left diagonal prediction direction. H and V of FIG. 4 represent the horizontal and vertical directionality, respectively, and the number ranging from -32 to 32 represents an angular position in units of 1/32 on the sample grids. The 2nd to the 33-th intra prediction modes have horizontal directionality while the 34-th to the 66-th intra prediction modes have vertical directionality. The 18-th intra prediction mode and the 50-th intra prediction mode represent the horizontal intra prediction mode and the vertical intra prediction mode, respectively, with reference to which a prediction direction of the angular intra prediction mode may be expressed in terms of an angle. In other words, a relative angle corresponding to each intra prediction mode may be expressed with reference to the horizontal reference angle of 0 degree that corresponds to the 18-th intra prediction mode, and a relative angle corresponding to each intra prediction mode may be expressed with reference to the vertical reference angle of 0 degree that corresponds to the 50-th intra prediction mode.

Meanwhile, as described above, in case intra prediction is performed for a current block, various methods may be applied to improve prediction accuracy. For example, a prediction sample of the current block may be derived by applying Un-equal Weighted Prediction (UWP) to the current block. Similarly, a prediction sample of the current block may be derived by applying Position Dependent intra Prediction Combination (PDPC) to the current block.

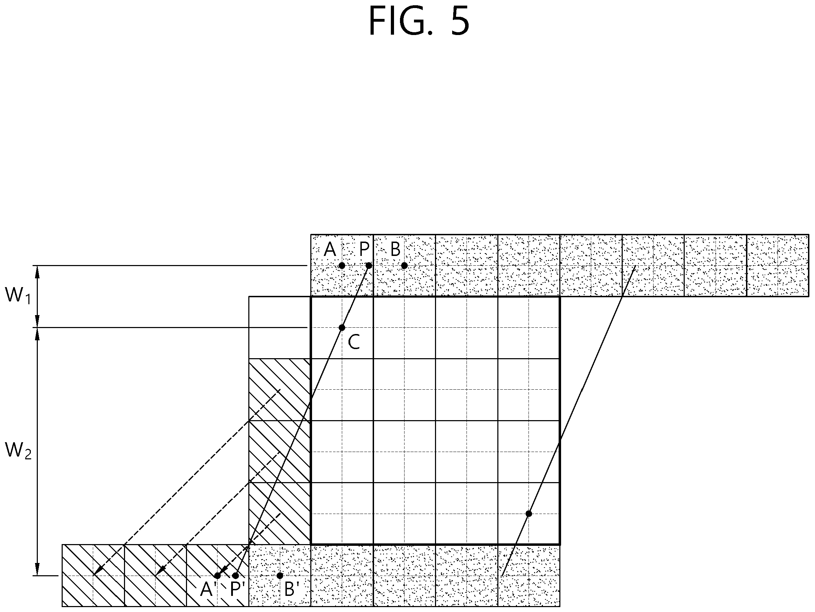

FIG. 5 illustrates one example of intra prediction performed by applying the UWP to the current block. The UWP may represent an intra prediction method that derives reference samples for a target sample of the current block according to the intra prediction mode for the current block, derives a weight for each reference sample, and derives a prediction sample of the target sample based on the reference samples and the weights for the reference samples. In other words, the prediction sample may be derived from a weighted sum of the reference samples. Referring to FIG. 5, the UWP may be performed for the target sample C of the current block, and reference samples of the target sample C may be derived according to the intra prediction mode of the current block. The reference samples may include the reference sample P located in the prediction direction of the intra prediction mode and the reference sample P' located in the opposite direction of the prediction direction. Next, a weight $W_1$ for the reference sample P may be derived, a weight $W_2$ for the reference sample P' may be derived, and a prediction value of the target sample C may be derived by summing a value obtained by multiplying the sample value of the reference sample P by the weight $W_1$ and a value obtained by multiplying the sample value of the reference sample P' by the weight $W_2$.

Meanwhile, a weight for each of the reference samples may be derived based on a (temporary) weight for the target sample.

For example, when the intra prediction mode of the current block is the planar mode, and the UWP is applied, reference samples of a target sample of the current block may be derived according to the planar mode. The prediction sample of the target sample may be generated from a weighted sum of the reference samples based on the weights for the reference samples. Also, even when the intra prediction mode of the current block is the angular intra prediction mode rather than the planar mode, the UWP may still be applied.

Here, the weight for the target sample may be derived based on a table stored in a memory. The table may be called a weight table. Also, the weight for the target sample may be called a temporary weight of the target sample. For example, in case the maximum size of a block in which intra prediction is performed is 128 x 128, the (temporary) weight for the target sample may be derived based on the following table.

[Table 1]

```
Unsigned int weight For UWP [257] = {
0, 1024, 512, 341, 256, 205, 171, 146, 128, 114, 103, 93, 85, 79, 73, 68,
64, 60, 57, 54, 51, 49, 47, 45, 43, 41, 39, 38, 37, 35, 34, 33,
32, 31, 30, 29, 28, 28, 27, 26, 26, 25, 24, 24, 23, 23, 22, 22,
21, 21, 20, 20, 20, 19, 19, 19, 18, 18, 18, 17, 17, 17, 16, 16,
16, 16, 16, 15, 15, 15, 15, 14, 14. 14, 14, 14, 14, 13, 13, 13,
13, 13, 13, 12, 12, 12, 12, 12, 12, 11, 11, 11, 11, 11, 11, 11,
11, 11, 10, 10, 10, 10, 10, 10, 10, 10, 10, 10, 10, 9, 9, 9,
9, 9, 9, 9, 9, 9, 9, 9, 9, 8, 8, 8, 8, 8, 8, 8,
8, 8, 8, 8, 8, 8, 8. 8, 8, 7. 7, 7, 7, 7, 7, 7,
7, 7, 7, 7, 7, 7, 7, 7, 7, 7, 7, 7, 7, 7, 6, 6,
6, 6, 6, 6, 6, 6, 6, 6, 6, 6, 6, 6, 6, 6, 6, 6,
6, 6, 6, 6, 6, 6, 6, 6, 6. 5, 5, 5, 5, 5, 5,
5, 5, 5, 5, 5, 5, 5, 5, 5, 5, 5, 5, 5, 5, 5, 5,
5, 5, 5, 5, 5, 5, 5, 5, 5, 5, 5, 5, 5, 5, 5, 5,
5, 5, 5, 5, 5, 4, 4. 4, 4, 4, 4, 4, 4, 4, 4, 4,
4, 4, 4, 4, 4, 4, 4, 4, 4, 4, 4, 4, 4, 4, 4, 4,
4};
```

Here, weightForUWP[n] may be derived by the n-th value of Table 1. The weightForUWP[n] may denote the weight for a target sample within a block in which intra prediction is performed. Also, the n may correspond to any one from 0 to 256.

Also, in another example, in case the maximum size of a block in which intra prediction is performed is 256 x 256, the (temporary) weight for the target sample may be derived based on the following table.

[Table 2]

```
Unsigned int weight For UWP [513] = {
0, 1024, 512, 341, 256, 205, 171, 146, 128, 114, 103, 93, 85, 79, 73, 68,
64, 60, 57, 54, 51, 49. 47, 45, 43, 41, 39, 38, 37, 35, 34, 33,
32, 31, 30, 29, 28, 28, 27, 26, 26, 25, 24, 24, 23, 23, 22, 22,
21, 21, 20, 20, 20, 19. 19, 19, 18, 18, 18, 17, 17, 17, 16, 16,
16, 16, 16, 15, 15, 15, 15, 14, 14, 14, 14, 14, 14, 13, 13, 13,
13, 13, 13, 12, 12, 12, 12, 12, 12, 11, 11, 11, 11, 11, 11, 11,
11, 11, 10, 10, 10, 10. 10, 10, 10, 10, 10, 10, 10, 9, 9, 9,
9, 9, 9, 9, 9, 9, 9, 9, 9, 8, 8, 8, 8, 8, 8, 8,
8, 8, 8, 8, 8, 8, 8, 8, 8, 7, 7, 7, 7, 7, 7, 7,
7, 7, 7, 7, 7, 7, 7, 7, 7, 7, 7, 7, 7, 7, 6, 6,
6, 6, 6, 6, 6, 6, 6, 6, 6, 6, 6, 6, 6, 6, 6, 6,
6, 6, 6, 6, 6, 6, 6, 6, 6, 6, 5, 5, 5, 5, 5, 5,
5. 5, 5, 5, 5, 5, 5, 5, 5, 5, 5, 5, 5, 5, 5, 5,
5, 5, 5, 5, 5, 5, 5, 5, 5, 5, 5, 5, 5, 5, 5, 5,
5, 5, 5, 5, 5, 4, 4, 4, 4, 4, 4, 4, 4, 4, 4, 4,
4. 4, 4, 4, 4, 4, 4, 4, 4, 4, 4, 4, 4, 4, 4, 4,
4, 4, 4, 4, 4, 4, 4, 4, 4, 4, 4, 4, 4, 4, 4, 4,
4, 4, 4, 4, 4, 4, 4, 4, 4, 4, 4, 4, 4, 4, 4, 4,
4, 4, 4, 4, 4, 4, 3, 3, 3, 3, 3, 3, 3, 3, 3, 3,
3, 3, 3, 3, 3, 3, 3, 3, 3, 3, 3, 3, 3, 3, 3, 3,
3, 3, 3, 3, 3, 3, 3, 3, 3, 3, 3, 3, 3, 3, 3, 3,
3, 3, 3, 3, 3, 3, 3, 3, 3, 3, 3, 3, 3, 3, 3, 3,
3, 3, 3, 3, 3, 3, 3, 3, 3, 3, 3, 3, 3, 3, 3, 3,
3, 3, 3, 3, 3, 3, 3, 3, 3, 3, 3, 3, 3, 3, 3, 3,
3, 3, 3, 3, 3, 3, 3, 3, 3, 3, 3, 3, 3, 3, 3, 3,
3, 3, 3, 3, 3, 3, 3, 3, 3, 3, 3, 2, 2, 2, 2, 2,
2, 2, 2, 2, 2, 2, 2, 2, 2, 2, 2, 2, 2, 2, 2, 2,
2, 2, 2, 2, 2, 2, 2, 2, 2, 2, 2, 2, 2, 2, 2, 2,
2, 2, 2, 2, 2, 2, 2, 2, 2, 2, 2, 2, 2, 2, 2, 2,
2, 2, 2, 2, 2, 2, 2, 2, 2, 2, 2, 2, 2, 2, 2, 2,
2, 2, 2, 2, 2, 2, 2, 2, 2, 2, 2, 2, 2, 2, 2, 2,
2, 2, 2, 2, 2, 2, 2, 2, 2, 2, 2, 2, 2, 2, 2, 2,
2
};
```

Here, weightForUWP[n] may be derived by the n-th value of Table 1. The n may correspond to any one from 0 to 512.

In what follows, described will be a method for deriving a weight for a reference sample based on a table stored in a memory as shown in Table 1 or 2.

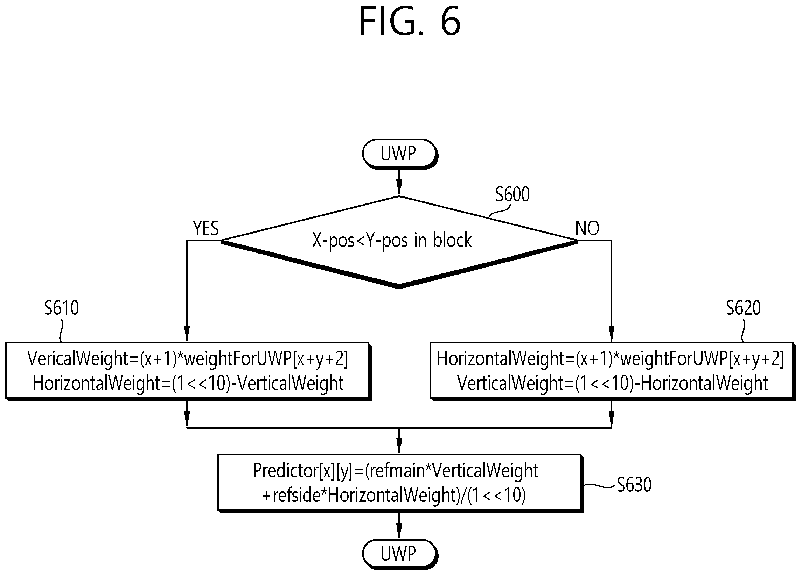

FIG. 6 illustrates one example of deriving weights of reference samples for a target sample of the current block. Referring to FIG. 6, when the UWP is applied to the current block, it may be determined whether the x component of a target sample of the current block is smaller than the y component of the target sample S600. X-pos shown in FIG. 6 may represent the x component of the target sample within the current block, and Y-pos may represent the y component of the target sample within the current block. When x component of a target sample of the current block is smaller than y component of the target sample, VerticalWeight may be derived by (x+1)*weightForUWP[x+y+2], and HorizontalWeight may be derived by (1<<10)-VerticalWeight S610. Here, the VerticalWeight may represent the vertical weight of the target sample, and HorizontalWeight may represent the horizontal weight of the target sample. Also, the vertical weight may be referred to as a first weight, and the horizontal weight may be referred to as a second weight.

Similarly, when x component of a target sample of the current block is not smaller than y component of the target sample, HorizontalWeight may be derived by (x+1)*weightForUWP[x+y+2], and VerticalWeight may be derived by (1<<10)-HorizontalWeight S620. Here, weightForUWP[x+y+2] may represent a (temporary) weight for the target sample derived based on Table 1 or 2 above. When the vertical weight and the horizontal weight of the target sample are derived, a prediction sample for a target sample of the current block may be derived by a weighted sum of reference samples of the target sample based on the vertical weight and the horizontal weight S630. More specifically, the prediction sample may be derived based on the following equation.

[Eq. 1]

$$\text{Predictor}[x][y] = (\text{refmain} * \text{VerticalWeight} + \text{refside} * \text{HorizontalWeight})/(1 << 10)$$

Here, Predictor[x][y] may represent a prediction sample of the target sample, VerticalWeight may represent the vertical weight of the target sample, HorizontalWeight may represent the horizontal weight of the target sample, refmain may represent a reference sample located in a prediction direction of an intra prediction mode of the current block with reference to the target sample, and refside may represent a reference sample located in the opposite direction of a prediction direction of an intra prediction mode of the current block with reference to the target sample.

Meanwhile, in case a weight is derived for a target sample based on a table stored in a memory as described above, the values of x and y are changed according to the size of the current block, namely, the ranges of the x and y components of the target sample are changed; therefore, as the size of the current block becomes larger, a more amount of memory may be needed. In particular, intra prediction may be very sensitive to the amount of memory consumption; therefore, in case a memory of 4*257 bytes is needed to store weights of the UWP, even though compression efficiency of the UWP, namely, prediction efficiency is good enough, the UWP may not be used due to a memory problem. Therefore, the present disclosure proposes a method for removing the use of the corresponding memory and generating a weight for a target sample based on the position of the target sample within a current block. In other words, instead of deriving a weight for the target sample based on the table above, a method for deriving a weight for the target sample based on the position of the reference samples and the equation is proposed.

More specifically, a weight for the target sample may be derived based on the following equation.

[Eq. 2]

$$\text{weight}[x][y] = ((1 \ll A))/ D$$

Here, x and y may represent the x and y components of the target sample; weight[x][y] may represent a weight for the target sample; A may represent precision of a weight table; and D may represent a divisor for calculating a weight for the target sample.

Meanwhile, A may have a variable value according to the size of the current block. For example, A may be derived as 10, and D may be derived by (x+y+2). In this case, a weight for the target sample may be derived based on the equation below.

[Eq. 3]

$$\text{weight}[x][y] = ((1 \ll 10))/ (x + y + 2))$$

Here, x and y may represent the x and y components of the target sample, and weight[x][y] may represent a weight for the target sample.

Meanwhile, if the x component of a target sample of the current block is smaller than the y component of the target sample, and a temporary weight of the target sample is derived based on Eq. 3 above, a first weight (namely, the vertical weight) and a second weight (namely, the horizontal weight) of the target sample may be derived based on the equation as follows.

[Eq. 4]

$$First Weight = (x+1)*weight[x][y]$$

$$Second Weight = (1 \ll 10) - First Weight$$

Here, x and y may represent the x and y components of the target sample, and weight[x][y] may represent a weight for the target sample.

Similarly, if the x component of a target sample of the current block is smaller than the y component of the target sample, and a temporary weight of the target sample is derived based on Eq. 3 above, a first weight (namely, the vertical weight) and a second weight (namely, the horizontal weight) of the target sample may be derived based on the equation as follows.

[Eq. 5]

$$Second Weight = (x+1)*weight[x][y]$$

$$First Weight = (1 \ll 10) - Second Weight$$

Here, x and y may represent the x and y components of the target sample, and weight[x][y] may represent a weight for the target sample.

When the size of the current block is 4x4, weights derived based on the existing weight table and the weights derived based on Eq. 3 may be obtained as follows.

[Table 3]

| 512 | 341 | 256 | 205 | | 512 | 341 | 256 | 204 |
|-----|-----|-----|-----|---|-----|-----|-----|-----|
| 341 | 256 | 205 | 171 | | 341 | 256 | 204 | 170 |
| 256 | 205 | 171 | 146 | | 256 | 204 | 170 | 146 |
| 205 | 171 | 146 | 128 | | 204 | 170 | 146 | 128 |
| (a) | | | | | (b) | | | |

Table 3(a) may represent a weight for each sample of the current block derived based on the existing weight table, and Table 3(b) may represent a weight for each sample of the current block derived based on Eq. 3 above.

Also, when the size of the current block is 8x8, weights derived based on the existing weight table and the weights derived based on Eq. 3 may be obtained as follows.

[Table 4]

| 512 | 341 | 256 | 205 | 171 | 146 | 128 | 114 | | 512 | 341 | 256 | 204 | 170 | 146 | 128 | 113 |
|-----|-----|-----|-----|-----|-----|-----|-----|---|-----|-----|-----|-----|-----|-----|-----|-----|
| 341 | 256 | 205 | 171 | 146 | 128 | 114 | 103 | | 341 | 256 | 204 | 170 | 146 | 128 | 113 | 102 |
| 256 | 205 | 171 | 146 | 128 | 114 | 103 | 93 | | 256 | 204 | 170 | 146 | 128 | 113 | 102 | 93 |
| 205 | 171 | 146 | 128 | 114 | 103 | 93 | 85 | | 204 | 170 | 146 | 128 | 113 | 102 | 93 | 85 |
| 171 | 146 | 128 | 114 | 103 | 93 | 85 | 79 | | 170 | 146 | 128 | 113 | 102 | 93 | 85 | 78 |
| 146 | 128 | 114 | 103 | 93 | 85 | 79 | 73 | | 146 | 128 | 113 | 102 | 93 | 85 | 78 | 73 |
| 128 | 114 | 103 | 93 | 85 | 79 | 73 | 68 | | 128 | 113 | 102 | 93 | 85 | 78 | 73 | 68 |
| 114 | 103 | 93 | 85 | 79 | 73 | 68 | 64 | | 113 | 102 | 93 | 85 | 78 | 73 | 68 | 64 |
| (a) | | | | | | | | | (b) | | | | | | | |

Table 4(a) may represent a weight for each sample of the current block derived based on the existing weight table, and Table 4(b) may represent a weight for each sample of the current block derived based on Eq. 3 above.

Alson, when the size of the current block is 16s16, weights derived based on the existing weight table and the weights derived based on Eq. 3 may be obtained as follows.

[Table 5]

| 512 | 341 | 256 | 205 | 171 | 146 | 128 | 114 | 103 | 93 | 85 | 79 | 73 | 68 | 64 | 60 |
|-----|-----|-----|-----|-----|-----|-----|-----|-----|----|----|----|----|----|----|----|
| 341 | 256 | 205 | 171 | 146 | 128 | 114 | 103 | 93 | 85 | 79 | 73 | 68 | 64 | 60 | 57 |
| 256 | 205 | 171 | 146 | 128 | 114 | 103 | 93 | 85 | 79 | 73 | 68 | 64 | 60 | 57 | 54 |
| 205 | 171 | 146 | 128 | 114 | 103 | 93 | 85 | 79 | 73 | 68 | 64 | 60 | 57 | 54 | 51 |
| 171 | 146 | 128 | 114 | 103 | 93 | 85 | 79 | 73 | 68 | 64 | 60 | 57 | 54 | 51 | 49 |
| 146 | 128 | 114 | 103 | 93 | 85 | 79 | 73 | 68 | 64 | 60 | 57 | 54 | 51 | 49 | 47 |
| 128 | 114 | 103 | 93 | 85 | 79 | 73 | 68 | 64 | 60 | 57 | 54 | 51 | 49 | 47 | 45 |
| 114 | 103 | 93 | 85 | 79 | 73 | 68 | 64 | 60 | 57 | 54 | 51 | 49 | 47 | 45 | 43 |
| 103 | 93 | 85 | 79 | 73 | 68 | 64 | 60 | 57 | 54 | 51 | 49 | 47 | 45 | 43 | 41 |
| 93 | 85 | 79 | 73 | 68 | 64 | 60 | 57 | 54 | 51 | 49 | 47 | 45 | 43 | 41 | 39 |
| 85 | 79 | 73 | 68 | 64 | 60 | 57 | 54 | 51 | 49 | 47 | 45 | 43 | 41 | 39 | 38 |
| 79 | 73 | 68 | 64 | 60 | 57 | 54 | 51 | 49 | 47 | 45 | 43 | 41 | 39 | 38 | 37 |
| 73 | 68 | 64 | 60 | 57 | 54 | 51 | 49 | 47 | 45 | 43 | 41 | 39 | 38 | 37 | 35 |
| 68 | 64 | 60 | 57 | 54 | 51 | 49 | 47 | 45 | 43 | 41 | 39 | 38 | 37 | 35 | 34 |
| 64 | 60 | 57 | 54 | 51 | 49 | 47 | 45 | 43 | 41 | 39 | 38 | 37 | 35 | 34 | 33 |
| 60 | 57 | 54 | 51 | 49 | 47 | 45 | 43 | 41 | 39 | 38 | 37 | 35 | 34 | 33 | 32 |

[Table 6]

| 512 | 341 | 256 | 204 | 170 | 146 | 128 | 113 | 102 | 93 | 85 | 78 | 73 | 68 | 64 | 60 |
|-----|-----|-----|-----|-----|-----|-----|-----|-----|----|----|----|----|----|----|----|
| 341 | 256 | 204 | 170 | 146 | 128 | 113 | 102 | 93 | 85 | 78 | 73 | 68 | 64 | 60 | 56 |
| 256 | 204 | 170 | 146 | 128 | 113 | 102 | 93 | 85 | 78 | 73 | 68 | 64 | 60 | 56 | 53 |
| 204 | 170 | 146 | 128 | 113 | 102 | 93 | 85 | 78 | 73 | 68 | 64 | 60 | 56 | 53 | 51 |
| 170 | 146 | 128 | 113 | 102 | 93 | 85 | 78 | 73 | 68 | 64 | 60 | 56 | 53 | 51 | 48 |
| 146 | 128 | 113 | 102 | 93 | 85 | 78 | 73 | 68 | 64 | 60 | 56 | 53 | 51 | 48 | 46 |
| 128 | 113 | 102 | 93 | 85 | 78 | 73 | 68 | 64 | 60 | 56 | 53 | 51 | 48 | 46 | 44 |
| 113 | 102 | 93 | 85 | 78 | 73 | 68 | 64 | 60 | 56 | 53 | 51 | 48 | 46 | 44 | 42 |
| 102 | 93 | 85 | 78 | 73 | 68 | 64 | 60 | 56 | 53 | 51 | 48 | 46 | 44 | 42 | 40 |
| 93 | 85 | 78 | 73 | 68 | 64 | 60 | 56 | 53 | 51 | 48 | 46 | 44 | 42 | 40 | 39 |
| 85 | 78 | 73 | 68 | 64 | 60 | 56 | 53 | 51 | 48 | 46 | 44 | 42 | 40 | 39 | 37 |
| 78 | 73 | 68 | 64 | 60 | 56 | 53 | 51 | 48 | 46 | 44 | 42 | 40 | 39 | 37 | 36 |
| 73 | 68 | 64 | 60 | 56 | 53 | 51 | 48 | 46 | 44 | 42 | 40 | 39 | 37 | 36 | 35 |
| 68 | 64 | 60 | 56 | 53 | 51 | 48 | 46 | 44 | 42 | 40 | 39 | 37 | 36 | 35 | 34 |
| 64 | 60 | 56 | 53 | 51 | 48 | 46 | 44 | 42 | 40 | 39 | 37 | 36 | 35 | 34 | 33 |
| 60 | 56 | 53 | 51 | 48 | 46 | 44 | 42 | 40 | 39 | 37 | 36 | 35 | 34 | 33 | 32 |

Table 5 may represent a weight for each sample of the current block derived based on the existing weight table, and Table 6 may represent a weight for each sample of the current block derived based on Eq. 3 above.

Also, when the size of the current block is 32x32, wieghts derived based on the existing weight table and the weights derived based on Eq. 3 may be obtained as follows.

[Table 7]

```
512 341 256 205 171 146 128 114 103  93  85  79  73  68  64  60  57  54  51  49  47  45  43  41  39  38  37  35  34  33  32  31
341 256 205 171 146 128 114 103  93  85  79  73  68  64  60  57  54  51  49  47  45  43  41  39  38  37  35  34  33  32  31  30
256 205 171 146 128 114 103  93  85  79  73  68  64  60  57  54  51  49  47  45  43  41  39  38  37  35  34  33  32  31  30  29
205 171 146 128 114 103  93  85  79  73  68  64  60  57  54  51  49  47  45  43  41  39  38  37  35  34  33  32  31  30  29  28
171 146 128 114 103  93  85  79  73  68  64  60  57  54  51  49  47  45  43  41  39  38  37  35  34  33  32  31  30  29  28  28
146 128 114 103  93  85  79  73  68  64  60  57  54  51  49  47  45  43  41  39  38  37  35  34  33  32  31  30  29  28  28  27
128 114 103  93  85  79  73  68  64  60  57  54  51  49  47  45  43  41  39  38  37  35  34  33  32  31  30  29  28  28  27  26
114 103  93  85  79  73  68  64  60  57  54  51  49  47  45  43  41  39  38  37  35  34  33  32  31  30  29  28  28  27  26  26
103  93  85  79  73  68  64  60  57  54  51  49  47  45  43  41  39  38  37  35  34  33  32  31  30  29  28  28  27  26  26  25
 93  85  79  73  68  64  60  57  54  51  49  47  45  43  41  39  38  37  35  34  33  32  31  30  29  28  28  27  26  26  25  24
 85  79  73  68  64  60  57  54  51  49  47  45  43  41  39  38  37  35  34  33  32  31  30  29  28  28  27  26  26  25  24  24
 79  73  68  64  60  57  54  51  49  47  45  43  41  39  38  37  35  34  33  32  31  30  29  28  28  27  26  26  25  24  24  23
 73  68  64  60  57  54  51  49  47  45  43  41  39  38  37  35  34  33  32  31  30  29  28  28  27  26  26  25  24  24  23  23
 68  64  60  57  54  51  49  47  45  43  41  39  38  37  35  34  33  32  31  30  29  28  28  27  26  26  25  24  24  23  23  22
 64  60  57  54  51  49  47  45  43  41  39  38  37  35  34  33  32  31  30  29  28  28  27  26  26  25  24  24  23  23  22  22
 60  57  54  51  49  47  45  43  41  39  38  37  35  34  33  32  31  30  29  28  28  27  26  26  25  24  24  23  23  22  22  21
 57  54  51  49  47  45  43  41  39  38  37  35  34  33  32  31  30  29  28  28  27  26  26  25  24  24  23  23  22  22  21  21
 54  51  49  47  45  43  41  39  38  37  35  34  33  32  31  30  29  28  28  27  26  26  25  24  24  23  23  22  22  21  21  20
 51  49  47  45  43  41  39  38  37  35  34  33  32  31  30  29  28  28  27  26  26  25  24  24  23  23  22  22  21  21  20  20
 49  47  45  43  41  39  38  37  35  34  33  32  31  30  29  28  28  27  26  26  25  24  24  23  23  22  22  21  21  20  20  20
 47  45  43  41  39  38  37  35  34  33  32  31  30  29  28  28  27  26  26  25  24  24  23  23  22  22  21  21  20  20  20  19
 45  43  41  39  38  37  35  34  33  32  31  30  29  28  28  27  26  26  25  24  24  23  23  22  22  21  21  20  20  20  19  19
 43  41  39  38  37  35  34  33  32  31  30  29  28  28  27  26  26  25  24  24  23  23  22  22  21  21  20  20  20  19  19  18
 41  39  38  37  35  34  33  32  31  30  29  28  28  27  26  26  25  24  24  23  23  22  22  21  21  20  20  20  19  19  19  18
 39  38  37  35  34  33  32  31  30  29  28  28  27  26  26  25  24  24  23  23  22  22  21  21  20  20  20  19  19  19  18  18
 38  37  35  34  33  32  31  30  29  28  28  27  26  26  25  24  24  23  23  22  22  21  21  20  20  20  19  19  19  18  18  18
 37  35  34  33  32  31  30  29  28  28  27  26  26  25  24  24  23  23  22  22  21  21  20  20  20  19  19  19  18  18  18  17
 35  34  33  32  31  30  29  28  28  27  26  26  25  24  24  23  23  22  22  21  21  20  20  20  19  19  19  18  18  18  17  17
 34  33  32  31  30  29  28  28  27  26  26  25  24  24  23  23  22  22  21  21  20  20  20  19  19  19  18  18  18  17  17  17
 33  32  31  30  29  28  28  27  26  26  25  24  24  23  23  22  22  21  21  20  20  20  19  19  19  18  18  18  17  17  17  16
 32  31  30  29  28  28  27  26  26  25  24  24  23  23  22  22  21  21  20  20  20  19  19  19  18  18  18  17  17  17  16  16
 31  30  29  28  28  27  26  26  25  24  24  23  23  22  22  21  21  20  20  20  19  19  19  18  18  18  17  17  17  16  16  16
```

[Table 8]

```
512 341 256 204 170 146 128 113 102  93  85  78  73  68  64  60  56  53  51  48  46  44  42  40  39  37  36  35  34  33  32  31
341 256 204 170 146 128 113 102  93  85  78  73  68  64  60  56  53  51  48  46  44  42  40  39  37  36  35  34  33  32  31  30
256 204 170 146 128 113 102  93  85  78  73  68  64  60  56  53  51  48  46  44  42  40  39  37  36  35  34  33  32  31  30  29
204 170 146 128 113 102  93  85  78  73  68  64  60  56  53  51  48  46  44  42  40  39  37  36  35  34  33  32  31  30  29  28
170 146 128 113 102  93  85  78  73  68  64  60  56  53  51  48  46  44  42  40  39  37  36  35  34  33  32  31  30  29  28  27
146 128 113 102  93  85  78  73  68  64  60  56  53  51  48  46  44  42  40  39  37  36  35  34  33  32  31  30  29  28  27  26
128 113 102  93  85  78  73  68  64  60  56  53  51  48  46  44  42  40  39  37  36  35  34  33  32  31  30  29  28  27  26  26
113 102  93  85  78  73  68  64  60  56  53  51  48  46  44  42  40  39  37  36  35  34  33  32  31  30  29  28  27  26  26  25
102  93  85  78  73  68  64  60  56  53  51  48  46  44  42  40  39  37  36  35  34  33  32  31  30  29  28  27  26  26  25  24
 93  85  78  73  68  64  60  56  53  51  48  46  44  42  40  39  37  36  35  34  33  32  31  30  29  28  27  26  26  25  24  24
 85  78  73  68  64  60  56  53  51  48  46  44  42  40  39  37  36  35  34  33  32  31  30  29  28  27  26  26  25  24  24  23
 78  73  68  64  60  56  53  51  48  46  44  42  40  39  37  36  35  34  33  32  31  30  29  28  27  26  26  25  24  24  23  23
 73  68  64  60  56  53  51  48  46  44  42  40  39  37  36  35  34  33  32  31  30  29  28  27  26  26  25  24  24  23  23  22
 68  64  60  56  53  51  48  46  44  42  40  39  37  36  35  34  33  32  31  30  29  28  27  26  26  25  24  24  23  23  22  22
 64  60  56  53  51  48  46  44  42  40  39  37  36  35  34  33  32  31  30  29  28  27  26  26  25  24  24  23  23  22  22  21
 60  56  53  51  48  46  44  42  40  39  37  36  35  34  33  32  31  30  29  28  27  26  26  25  24  24  23  23  22  22  21  21
 56  53  51  48  46  44  42  40  39  37  36  35  34  33  32  31  30  29  28  27  26  26  25  24  24  23  23  22  22  21  21  20
 53  51  48  46  44  42  40  39  37  36  35  34  33  32  31  30  29  28  27  26  26  25  24  24  23  23  22  22  21  21  20  20
 51  48  46  44  42  40  39  37  36  35  34  33  32  31  30  29  28  27  26  26  25  24  24  23  23  22  22  21  21  20  20  20
 48  46  44  42  40  39  37  36  35  34  33  32  31  30  29  28  27  26  26  25  24  24  23  23  22  22  21  21  20  20  20  19
 46  44  42  40  39  37  36  35  34  33  32  31  30  29  28  27  26  26  25  24  24  23  23  22  22  21  21  20  20  20  19  19
 44  42  40  39  37  36  35  34  33  32  31  30  29  28  27  26  26  25  24  24  23  23  22  22  21  21  20  20  20  19  19  18
 42  40  39  37  36  35  34  33  32  31  30  29  28  27  26  26  25  24  24  23  23  22  22  21  21  20  20  20  19  19  18  18
 40  39  37  36  35  34  33  32  31  30  29  28  27  26  26  25  24  24  23  23  22  22  21  21  20  20  20  19  19  18  18  18
 39  37  36  35  34  33  32  31  30  29  28  27  26  26  25  24  24  23  23  22  22  21  21  20  20  20  19  19  18  18  18  17
 37  36  35  34  33  32  31  30  29  28  27  26  26  25  24  24  23  23  22  22  21  21  20  20  20  19  19  18  18  18  17  17
 36  35  34  33  32  31  30  29  28  27  26  26  25  24  24  23  23  22  22  21  21  20  20  20  19  19  18  18  18  17  17  17
 35  34  33  32  31  30  29  28  27  26  26  25  24  24  23  23  22  22  21  21  20  20  20  19  19  18  18  18  17  17  17  17
 34  33  32  31  30  29  28  27  26  26  25  24  24  23  23  22  22  21  21  20  20  20  19  19  18  18  18  17  17  17  17  16
 33  32  31  30  29  28  27  26  26  25  24  24  23  23  22  22  21  21  20  20  20  19  19  18  18  18  17  17  17  17  16  16
 32  31  30  29  28  27  26  26  25  24  24  23  23  22  22  21  21  20  20  20  19  19  18  18  18  17  17  17  17  16  16  16
 31  30  29  28  27  26  26  25  24  24  23  23  22  22  21  21  20  20  20  19  19  18  18  18  17  17  17  17  16  16  16  16
```

Table 7 may represent a weight for each sample of the current block derived based on the existing weight table, and Table 8 may represent a weight for each sample of the current block derived based on Eq. 3 above.

As shown in Table 3 to Table 8, a weight for the target sample may be generated based on the position of the target sample and Eq. 3 proposed by the present disclosure regardless of the size of the current block. In other words, the method for generating a weight based on the equation above may be performed without being limited to the size of the current block.

Meanwhile, in describing a method for generating a weight based on the equation above, the present disclosure describes only the method for deriving a weight for each sample when the current block corresponds to one of 4x4 to 32x32 blocks, namely, when the type of the current block is a square block. However, as described below, even when the type of the current block is a non-square block, a weight for each sample of the current block may still be derived based on the equation above.

For example, when the size of the current block is 8x4, weights derived based on the existing weight table and the weights derived based on Eq. 3 may be obtained as follows.

[Table 9]

| 512 | 341 | 256 | 205 | 171 | 146 | 128 | 114 | 512 | 341 | 256 | 204 | 170 | 146 | 128 | 113 |
|-----|-----|-----|-----|-----|-----|-----|-----|-----|-----|-----|-----|-----|-----|-----|-----|
| 341 | 256 | 205 | 171 | 146 | 128 | 114 | 103 | 341 | 256 | 204 | 170 | 146 | 128 | 113 | 102 |
| 256 | 205 | 171 | 146 | 128 | 114 | 103 | 93 | 256 | 204 | 170 | 146 | 128 | 113 | 102 | 93 |
| 205 | 171 | 146 | 128 | 114 | 103 | 93 | 85 | 204 | 170 | 146 | 128 | 113 | 102 | 93 | 85 |
| (a) | | | | | | | | (b) | | | | | | | |

Table 9(a) may represent a weight for each sample of the current block derived based on the existing weight table, and Table 9(b) may represent a weight for each sample of the current block derived based on Eq. 3 above.

Also, when the size of the current block is 4x8, for example, weights derived based on the existing weight table and the weights derived based on Eq. 3 may be obtained as follows.

[Table 10]

| 512 | 341 | 256 | 205 | 512 | 341 | 256 | 204 |
|-----|-----|-----|-----|-----|-----|-----|-----|
| 341 | 256 | 205 | 171 | 341 | 256 | 204 | 170 |
| 256 | 205 | 171 | 146 | 256 | 204 | 170 | 146 |
| 205 | 171 | 146 | 128 | 204 | 170 | 146 | 128 |
| 171 | 146 | 128 | 114 | 170 | 146 | 128 | 113 |
| 146 | 128 | 114 | 103 | 146 | 128 | 113 | 102 |
| 128 | 114 | 103 | 93 | 128 | 113 | 102 | 93 |
| 114 | 103 | 93 | 85 | 113 | 102 | 93 | 85 |
| (a) | | | | (b) | | | |

Table 10(a) may represent a weight for each sample of the current block derived based on the existing weight table, and Table 10(b) may represent a weight for each sample of the current block derived based on Eq. 3 above.

Meanwhile, Eq. 3 above does not take into account the distance between the target sample and a reference sample, namely, the decimal point of a weight derived based on the position of the target sample within the current block. Therefore, an equation involving rounding may be proposed as an equation that takes into account the decimal point of the weight. For example, a weight for the target sample may be derived based on the following equation.

[Eq. 6]

$$\text{weight}[x][y] = ((1 \ll A) + \text{offset}) / D)$$

Here, x and y may represent the x and y components of the target sample; weight[x] [y] may represent a weight for a reference sample of the target sample; A may represent precision of a weight table; and D may represent a divisor for calculating a weight for a reference sample of the target sample.

Meanwhile, A may have a variable value according to the size of the current block. For example, A may be derived as 10, and D may be derived by (x+y+2). Also, the offset may be derived by (D>>1). In this case, a weight for the target sample may be derived based on the equation below.

$$[Eq.\ 7]$$

$$\text{weight}[x][y] = ((1 \ll 10) + ((x + y + 2) \gg 1))/ (x + y + 2))$$

Here, x and y may represent the x and y components of the target sample; and weight[x][y] may represent a weight of the target sample. Based on Eq. 7 above, a weight of the target sample of the current block that takes into account a rounding error may be derived. Meanwhile, a weight of the target sample may be derived based on Eq. 7, and if the x component of the target sample is smaller than the y component of the target sample, a first and second weights of the target sample may be derived based on Eq. 4 above. Also, a weight of the target sample may be derived based on Eq. 7, and if the x component of the target sample is not smaller than the y component of the target sample, a first and second weights of the target sample may be derived based on Eq. 5.

For example, in case the size of the current block is 4x4, weights derived based on the existing weight table, the weights derived based on Eq. 3, and the weights derived based on Eq. 7 may be obtained as follows.

[Table 11]

| 512 | 341 | 256 | 205 |
|-----|-----|-----|-----|
| 341 | 256 | 205 | 171 |
| 256 | 205 | 171 | 146 |
| 205 | 171 | 146 | 128 |
| (a) | | | |
| 512 | 341 | 256 | 204 |
| 341 | 256 | 204 | 170 |
| 256 | 204 | 170 | 146 |
| 204 | 170 | 146 | 128 |
| (b) | | | |
| 512 | 341 | 256 | 205 |
| 341 | 256 | 205 | 171 |
| 256 | 205 | 171 | 146 |
| 205 | 171 | 146 | 128 |
| (c) | | | |

Table 11(a) may represent a weight for each sample of the current block derived based on the existing weight table, Table 11(b) may represent a weight for each sample of the current block derived based on Eq. 3, and Table 11(c) may represent a weight for each sample of the current block derived based on Eq. 7.

Meanwhile, a prediction sample of the current block may be derived by applying Position Dependent intra Prediction Combination (PDPC) to the current block.

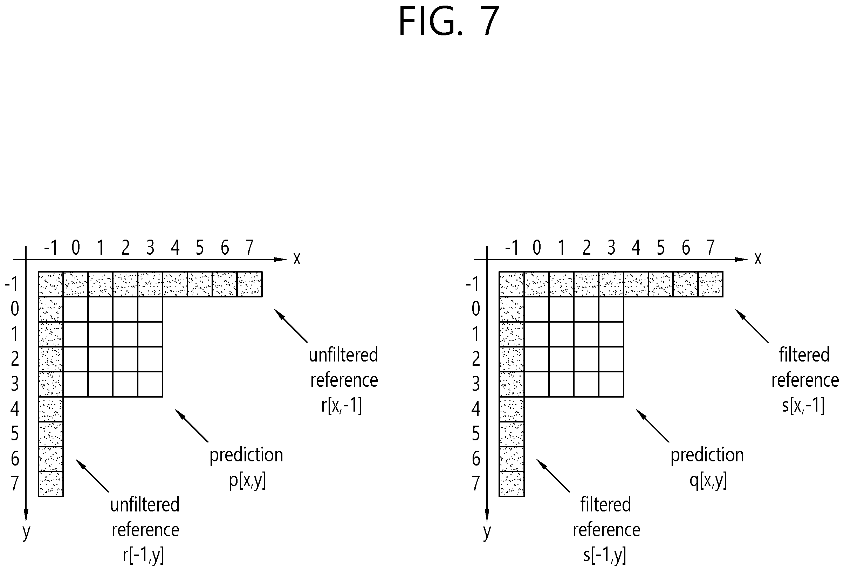

FIG. 7 illustrates one example of intra prediction performed by applying the PDPC to the current block. The PDPC may represent an intra prediction method performed based on unfiltered reference samples and filtered reference samples. More specifically, the PDPC may represent an intra prediction method that derives filtered reference samples by performing filtering based on a filter for the PDPC, derives a temporary prediction sample of the current block based on an intra prediction mode of the current block and the filtered reference samples, and derives a prediction sample of the current block by a weighted sum of at least one reference sample derived according to the intra prediction mode among unfiltered reference samples and the temporary prediction sample. For example, suppose x and y components of the top-left sample of the current block are 0 and 0, the intra prediction mode of the current block is the planar mode, and the position of a target sample of the current block is (x, y). Referring to FIG. 7, a temporary prediction sample q[x, y] of the target sample may be derived based on the filtered reference samples s[x, -1] and s[-1, y], and a prediction sample p[x, y] of the target sample may be derived by a weighted sum of unfiltered reference samples r[x, -1] and r[-1, y] with the temporary prediction sample q[x, y] derived above.

Here, the predefined filter may be any one of 5 7-tap filters. Or the predefined filter may be any one of a 3-tap filter, 5-tap filter, and 7-tap filter. The 3-tap filter, 5-tap filter, and 7-tap filter may represent a filter with 3 filter coefficients, a filter with 5 filter coefficients, and a filter with 7 filter coefficients, respectively. Meanwhile, a PDPC flag that indicates whether the PDPC is applied may be signaled. Whether to apply the PDPC to the current block may be determined based on the value of the PDPC flag. For example, if the value of the PDPC flag is 1, the PDPC flag may indicate that the PDPC is applied to the current block while, if the value of the PDPC flag is 0, the PDPC flag may indicate that the PDPC is not applied to the current block.

Meanwhile, a process for encoding/decoding an input image may be performed more efficiently if the UWP and the PDPC are applied under a specific condition. Also, since the UWP may bring an effect similar to that from the PDPC, a method for selectively applying the UWP and the PDPC may be proposed so that the maximum compression efficiency may be obtained without the UWP and the PDPC being overlapped with each other, through which the encoding/decoding efficiency may be further improved.

Therefore, the present disclosure proposes methods for performing intra prediction on the current block by applying the UWP or the PDPC under a specific condition.

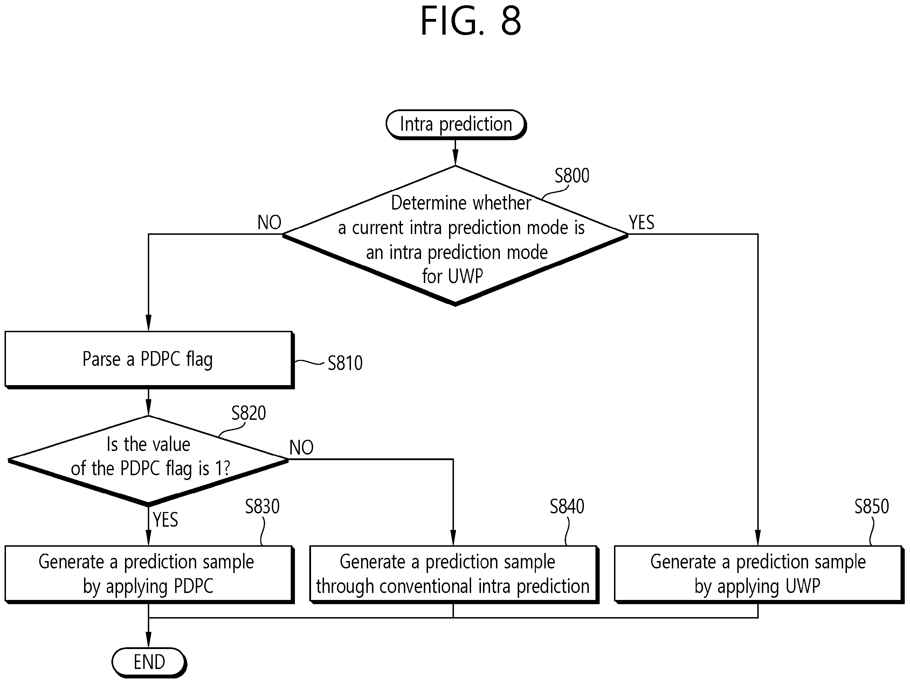

FIG. 8 illustrates one example of intra prediction performed by applying the UWP and the PDCP selectively. Referring to FIG. 8, a specific intra prediction mode among intra prediction modes may be configured as an intra prediction mode to which the UWP is applied, and if an intra prediction mode of the current block is the specific intra prediction mode, the PDPC may not be applied to the current block. More specifically, a decoding apparatus may determine whether an intra prediction mode of the current block is an intra prediction mode to which the UWP is applied S800. If the intra prediction mode of the current block is not an intra prediction mode to which the UWP is applied, the decoding apparatus may parse a PDPC flag that indicates whether the PDPC is applied S810 and determine whether the value of the PDPC flag is 1 S820. The decoding apparatus may determine, based on the value of the PDPC flag, whether the PDPC is applied to the current block. For example, if the value of the PDPC flag is 1, the PDPC flag may indicate that the PDPC is applied to the current block while, if the value of the PDPC flag is 0, the PDPC flag may indicate that the PDPC is not applied to the current block.

When the value of the PDPC flag is 1, the decoding apparatus may generate a prediction sample of the target sample by performing intra prediction based on the PDPC S830. More specifically, the decoding apparatus may derive filtered reference samples by performing filtering using a filter for the PDPC and derive a temporary prediction sample of the target sample based on the intra prediction mode of the current block and the filtered reference samples. Next, the decoding apparatus may derive a prediction sample of the target sample by using a weighted sum of at least one reference sample derived according to the intra prediction mode among unfiltered reference samples of the current block and the temporary prediction sample.

Meanwhile, when the value of the PDPC flag is 0, the decoding apparatus may generate a prediction sample of the target sample by performing conventional intra prediction S840. More specifically, the decoding apparatus may derive a prediction sample of the target sample based on at least one reference sample derived according to the intra prediction mode among reference samples of the current block.

Meanwhile, if the intra prediction mode of the current block is an intra prediction mode to which the UWP is applied, the decoding apparatus may generate a prediction sample of the target sample by performing intra prediction based on the UWP S850. More specifically, the decoding apparatus may derive weights for the target sample and based on the weights, derive a prediction sample of the target sample by using a weighted sum of reference samples derived according to the intra prediction mode among reference samples of the current block.

Meanwhile, a method for performing intra prediction of the current block by applying the UWP or the PDPC under a specific condition as described below may be proposed.

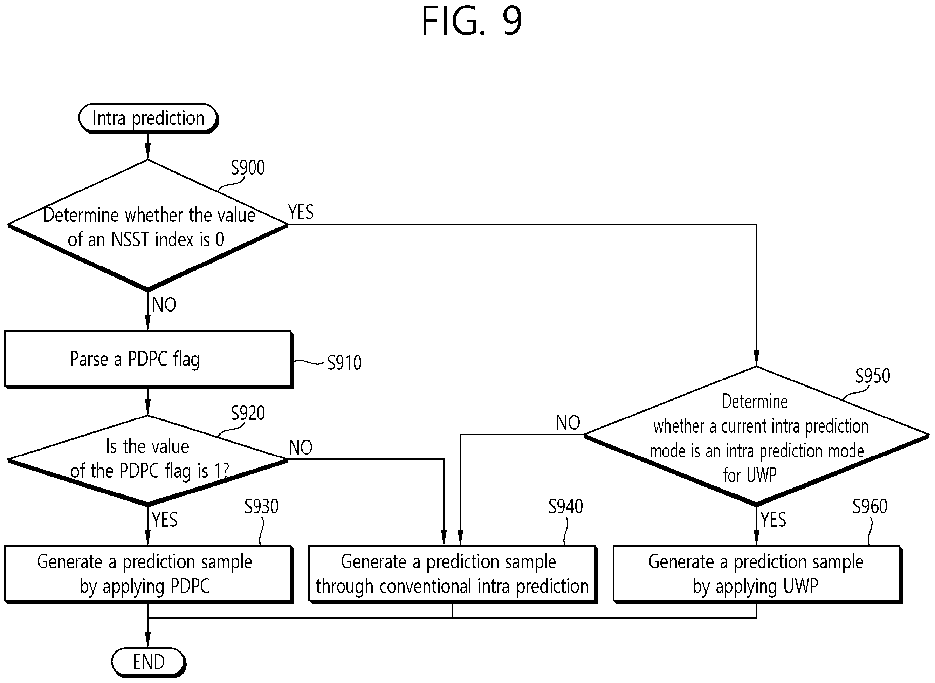

FIG. 9 illustrates one example of intra prediction performed by applying the UWP and the PDPC selectively. Referring to FIG. 9, in case non-separable secondary transform (NSST) is not performed on the current block, the PDPC of the current block is not applied to the current block, but intra prediction based on the UWP is performed instead to generate a prediction sample of the target sample. Here, NSST may represent a transform that derives first-order transform coefficients of the current block through DCT type-2 or adaptive multiple core transform (AMT) and generates transform coefficients (or second-order transform coefficients) for a residual signal of the current block through a secondary transform of the derived first-order transform coefficients based on a non-separable transform matrix. The AMT may represent a transform method that transforms a residual signal (or a residual block) of the current block in the spatial domain into modified transform coefficients (or first-order transform coefficients) in the frequency domain based on a plurality of transform kernels selected from among DCT type 2, DST type 7, DCT type 8, and DST type 1.

More specifically, the decoding apparatus may determine whether the value of NSST index for the current block is 0 S900. The NSST index may be an index that indicates whether the NSST is performed on the current block. The decoding apparatus may determine, based on the value of the NSST index, whether the NSST is performed on the current block. For example, if the value of the NSST index is 1, the NSST index may indicate that the NSST is performed on the current block, and if the value of the NSST index is 0, the NSST index may indicate that the NSST is not performed on the current block.

If the value of the NSST index is 0, the decoding apparatus may parse a PDPC flag that indicates whether the PDPC is applied S910 and determine whether the value of the PDPC flag is 1 S920. The decoding apparatus may determine, based on the value of the PDPC flag, whether the PDPC is applied to the current block. For example, if the value of the PDPC flag is 1, the PDPC flag may indicate that the PDPC is applied to the current block while, if the value of the PDPC flag is 0, the PDPC flag may indicate that the PDPC is not applied to the current block.

When the value of the PDPC flag is 1, the decoding apparatus may generate a prediction sample of the target sample by performing intra prediction based on the PDPC S930. More specifically, the decoding apparatus may derive filtered reference samples by performing filtering using a filter for the PDPC and derive a temporary prediction sample of the target sample based on the intra prediction mode of the current block and the filtered reference samples. Next, the decoding apparatus may derive a prediction sample of the target sample by using a weighted sum of at least one reference sample derived according to the intra prediction mode among unfiltered reference samples of the current block and the temporary prediction sample.

Meanwhile, when the value of the PDPC flag is 0, the decoding apparatus may generate a prediction sample of the target sample by performing conventional intra prediction S940. More specifically, the decoding apparatus may derive a prediction sample of the target sample based on at least one reference sample derived according to the intra prediction mode among reference samples of the current block.

Meanwhile, if the value of the NSST index is 1, the decoding apparatus may determine whether an intra prediction mode of the current block is an intra prediction mode to which the UWP is applied S950. If the intra prediction mode of the current block is an intra prediction mode to which the UWP is applied, the decoding apparatus may generate a prediction sample of the target sample by performing intra prediction based on the UWP S960. More specifically, the decoding apparatus may derive weights for the target sample and based on the weights, derive a prediction sample of the target sample by using a weighted sum of reference samples derived according to the intra prediction mode among reference samples of the current block. Meanwhile, if the intra prediction mode of the current block is not an intra prediction mode to which the UWP is applied, the decoding apparatus may generate a prediction sample of the target sample by performing conventional intra prediction S940. More specifically, the decoding apparatus may derive a prediction sample of the target sample based on at least one reference sample derived according to the intra prediction mode of the current block among reference samples of the current block.

Meanwhile, in addition to whether the NSST is performed, whether the PDPC is applied may be determined based on a condition such as the size of the current block or characteristics of a residual signal. A method for applying the UWP or the PDPC in consideration of a specific condition may be generalized as described below.

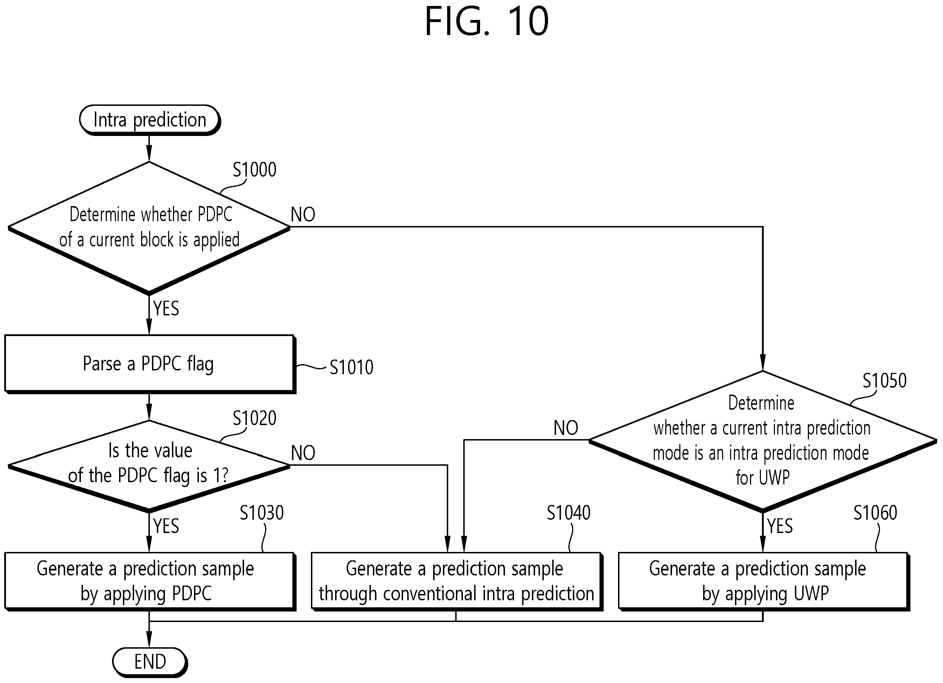

FIG. 10 illustrates one example of intra prediction performed by applying the UWP and the PDCP selectively. More specifically, the decoding apparatus may determine whether PDPC is applied to the current block S1000. In other words, the decoding apparatus may determine whether a specific condition is met. For example, the decoding apparatus may determine whether PDPC is applied to the current block based on the size of the current block. The decoding apparatus may determine whether the size of the current block is larger than the minimum size to which the PDPC is applied. In this case, the decoding apparatus may determine whether the PDPC is applied to the current block based on the equation above.

$$[\text{Eq. 8}]$$

$$\text{Bool canBeCodedByPDPC} = \text{Block size} > \text{MIN\_BLOCK\_SIZE\_OF\_PDPC}$$

Here, Block size may represent the size of the current block, and MIN_BLOCK_SIZE_OF_PDPC may represent the minimum size to which the PDPC is applied. If the size of the current block is larger than the minimum size, the PDPC may not be applied to the current block while, if the size of the current block is not larger than the minimum size, the PDPC may be applied to the current block.

Also, as another example, the decoding apparatus may determine whether PDPC is applied to the current block based on characteristics of a residual signal. The decoding apparatus may determine whether the number of non-zero transform coefficients in the residual signal is not larger than the minimum number of non-zero transform coefficients to which the PDPC is applied. In this case, the decoding apparatus may determine whether the PDPC is applied to the current block based on the equation above.

[Eq. 9]

$$\text{Bool canBeCodedByPDPC} =$$
$$\text{Number of nonZeroCoeff(Block)} > MIN\_NUM\_OF\_NONZERO\_COEFF\_FOR\_PDPC$$

Here, Number of nonZeroCoeff(Block) may represent the number of non-zero transform coefficients of the current block, and MIN_NUM_OF_NONZERO_COEFF_FOR_PDPC may represent the minimum number of non-zero transform coefficients to which the PDPC is applied. If the number of non-zero transform coefficients of the current block is larger than the minimum number, the PDPC may not be applied to the current block while, if the number of non-zero transform coefficients of the current block is not larger than the minimum number, the PDPC may be applied to the current block.

If a specific condition of the current block is satisfied, namely, for example, if the size of the current block is not larger than the minimum size to which the PDPC is applied or the number of non-zero transform coefficients of the current block is not larger than the minimum number of non-zero transform coefficients to which the PDPC is applied, the decoding apparatus may parse a PDPC flag that indicates whether the PDPC is applied S1010 and determine whether the value of the PDPC flag is 1 S1020. The decoding apparatus may determine, based on the value of the PDPC flag, whether the PDPC is applied to the current block. For example, if the value of the PDPC flag is 1, the PDPC flag may indicate that the PDPC is applied to the current block while, if the value of the PDPC flag is 0, the PDPC flag may indicate that the PDPC is not applied to the current block.

When the value of the PDPC flag is 1, the decoding apparatus may generate a prediction sample of the target sample by performing intra prediction based on the PDPC S1030. More specifically, the decoding apparatus may derive filtered reference samples by performing filtering using a filter for the PDPC and derive a temporary prediction sample of the target sample based on the intra prediction mode of the current block and the filtered reference samples. Next, the decoding apparatus may derive a prediction sample of the target sample by using a weighted sum of at least one reference sample derived according to the intra prediction mode among unfiltered reference samples of the current block and the temporary prediction sample.

Meanwhile, when the value of the PDPC flag is 0, the decoding apparatus may generate a prediction sample of the target sample by performing conventional intra prediction S 1040. More specifically, the decoding apparatus may derive a prediction sample of the target sample based on at least one reference sample derived according to the intra prediction mode among reference samples of the current block.

Meanwhile, if a specific condition of the current block is satisfied, namely, for example, if the size of the current block is larger than the minimum size to which the PDPC is applied or the number of non-zero transform coefficients of the current block is larger than the minimum number of non-zero transform coefficients to which the PDPC is applied, the decoding apparatus may determine whether the intra prediction mode of the current block is an intra prediction mode to which the UWP is applied S1050. If the intra prediction mode of the current block is an intra prediction mode to which the UWP is applied, the decoding apparatus may generate a prediction sample of the target sample by performing intra prediction based on the UWP S1060. More specifically, the decoding apparatus may derive weights for the target sample and based on the weights, derive a prediction sample of the target sample by using a weighted sum of reference samples derived according to the intra prediction mode among reference samples of the current block. Meanwhile, if the intra prediction mode of the current block is not an intra prediction mode to which the UWP is applied, the decoding apparatus may generate a prediction sample of the target sample by performing conventional intra prediction S1040. More specifically, the decoding apparatus may derive a prediction sample of the target sample based on at least one reference sample derived according to the intra prediction mode of the current block among reference samples of the current block.

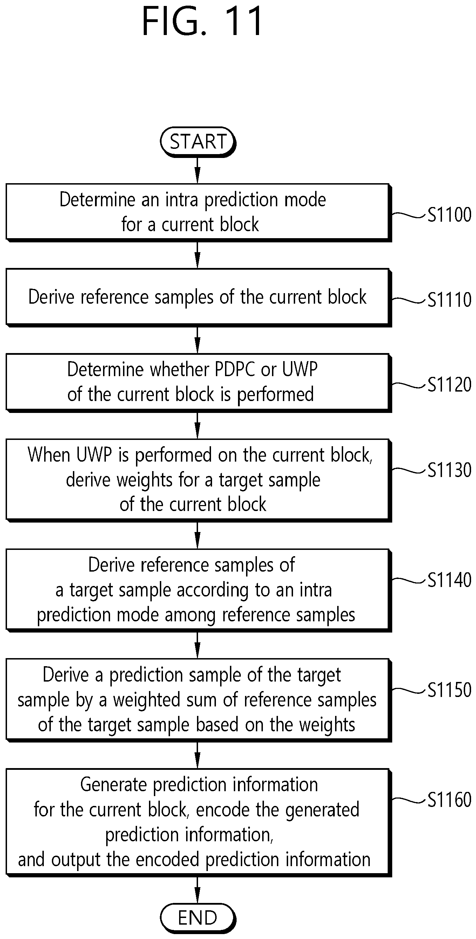

FIG. 11 illustrates a video encoding method by an encoding apparatus according to the present disclosure. The method disclosed in FIG. 11 may be performed by an encoding apparatus disclosed in FIG. 1. More specifically, for example, S1100 to S1150 steps of FIG. 11 may be performed by the prediction unit of the encoding apparatus, and S1160 step may be performed by the entropy encoding unit of the encoding apparatus.

The encoding apparatus determines an intra prediction mode for a current block S1100. The encoding apparatus may perform various intra prediction modes and derive an intra prediction mode exhibiting an optimal RD cost as an intra prediction mode for the current block. The intra prediction mode may be any one of two unidirectional prediction modes and 33 angular prediction modes. The two unidirectional prediction modes may include an intra DC mode and an intra planar mode as described above. Or the intra prediction mode may be any one of two unidirectional intra prediction modes and 65 angular intra prediction modes. As described above, the two unidirectional prediction modes may include the intra DC mode and the intra planar mode. Also, the 65 angular intra prediction modes may include vertical angular intra prediction modes and horizontal angular prediction modes. The vertical angular prediction modes may include the 34-th intra prediction mode to the 66-th intra prediction mode; and the horizontal angular intra prediction modes may include the 2nd intra prediction mode to the 33-th intra prediction mode.

The encoding apparatus derives reference samples of the current block S1110. The encoding apparatus may derive reference samples of the current block. The reference samples may include the left reference samples, the top-left reference sample, and the upper reference samples. The left reference samples, the top-left reference sample, and the upper reference samples may be derived from neighboring blocks already restored when the current block is decoded. 2N upper reference samples, top-left reference sample, and 2N left reference samples of the current block may be derived. Here, when a size of the current block is N x N, and the x and y components of the top-left sample of the current block are 0 and 0, the left reference samples may range from p[-1][0] to p[-1][2N-1], the top-left reference sample may be p[-1][-1], and the upper reference samples may range from p[0][-1] to p[2N-1][-1].

Similarly, when the size of the current block is M x N, and the x and y components of the top-left sample of the current block are 0 and 0, the M+N upper reference samples, top-left reference sample, and M+N left reference samples of the current block may be derived. When the size of the current block is an M x N non-square block, and the x and y components of the top-left sample of the current block are 0 and 0, the left reference samples may range from p[-1][0] to p[-1][M+N-1], the top-left reference sample may be p[-1][-1], and the upper reference samples may range from p[0][-1] to p[M+N-1][-1].

The encoding apparatus may determine whether Position Dependent intra Prediction Combination (PDPC) or Un-equal Weight Prediction (UWP) of the current block is performed S1120. The encoding apparatus may determine, based on various conditions, whether PDPC or UWP is performed on the current block.

As one example, the encoding apparatus may determine, based on an intra prediction mode of the current block, whether Position Dependent intra Prediction Combination (PDPC) or Un-equal Weight Prediction (UWP) of the current block is performed. More specifically, the encoding apparatus may determine whether the intra prediction mode is an intra prediction mode for the UWP. When the intra prediction mode is not an intra prediction mode for the UWP, the encoding apparatus may determine whether PDPC of the current block is performed and when it is determined that the PDPC is performed on the current block, derive the prediction sample of the target sample within the current block by performing the PDPC based on the intra prediction mode. When the prediction sample of the target sample within the current block is derived by performing the PDPC based on the intra prediction mode, the encoding apparatus may derive filtered reference samples by performing filtering based on a filter for the PDPC, derive a temporary prediction sample of the target sample based on an intra prediction mode of the current block and the filtered reference samples, and derive the prediction sample of the target sample by applying a weighted sum of at least one reference sample derived according to the intra prediction mode among the unfiltered reference samples and the temporary prediction sample. Meanwhile, when the intra prediction mode is an intra prediction mode for the UWP, the encoding apparatus may derive the prediction sample of the target sample within the current block by performing the UWP on the current block based on the intra prediction mode. Meanwhile, the encoding apparatus may generate a PDPC flag that indicates whether PDPC of the current block is performed. For example, when the value of the PDPC flag is 1, the PDPC flag may indicate that the PDPC is performed on the current block while, when the value of the PDPC flag is 0, the PDPC flag may indicate that the PDPC is not performed on the current block.

As another example, the encoding apparatus may determine whether the PDPC or the UWP of the current block is performed, based on whether non-separable secondary transform (NSST) of the current block is applied. More specifically, the encoding apparatus may determine whether the NSST of the current block is applied. When it is determined that the NSST is performed on the current block, the encoding apparatus may determine whether the PDPC of the current block is performed, and when it is determined that the PDPC is performed on the current block, the encoding apparatus may derive the prediction sample of the target sample within the current block by performing the PDPC based on the intra prediction mode. when the prediction sample of the target sample within the current block is derived by performing the PDPC based on the intra prediction mode, the encoding apparatus may derive filtered reference samples by performing filtering based on a filter for the PDPC, derive a temporary prediction sample of the target sample based on an intra prediction mode of the current block and the filtered reference samples, and derive the prediction sample of the target sample by applying a weighted sum of at least one reference sample derived according to the intra prediction mode among the unfiltered reference samples and the temporary prediction sample. Meanwhile, when it is determined that the NSST is not performed on the current block, the encoding apparatus may determine whether the intra prediction mode is an intra prediction mode for the UWP and when it is determined that the intra prediction mode is an intra prediction mode for the UWP, derive the prediction sample of the target sample within the current block by performing the UWP on the current block, based on the intra prediction mode. Meanwhile, the encoding apparatus may generate a PDPC flag that indicates whether the PDPC of the current block is performed. For example, when the value of the PDPC flag is 1, the PDPC flag may indicate that the PDPC is performed on the current block while, when the value of the PDPC flag is 0, the PDPC flag may indicate that the PDPC is not performed on the current block. Also, the encoding apparatus may generate an NSST index that indicates whether NSST of the current block is applied. For example, when the value of the NSST index is 0, the NSST index may indicate that NSST is not applied to the current block while, when the value of the NSST index is not zero, the NSST index may indicate that NSST is applied to the current block.

As yet another example, the encoding apparatus may determine, based on the size of the current block, whether the PDPC or the UWP of the current block is performed. More specifically, the encoding apparatus may determine whether the size of the current block is smaller than a specific size. The specific size may represent the minimum size to which the PDPC is applied. when the size of the current block is smaller than the specific size, the encoding apparatus may determine whether the PDPC of the current block is performed, and when it is determined that the PDPC is performed on the current block, the encoding apparatus may derive the prediction sample of the target sample within the current block by performing the PDPC based on the intra prediction mode. When the prediction sample of the target sample within the current block is derived by performing the PDPC based on the intra prediction mode, the encoding apparatus may derive filtered reference samples by performing filtering based on a filter for the PDPC, derive a temporary prediction sample of the target sample based on an intra prediction mode of the current block and the filtered reference samples, and derive the prediction sample of the target sample by applying a weighted sum of at least one reference sample derived according to the intra prediction mode among the unfiltered reference samples and the temporary prediction sample. Meanwhile, when the size of the current block is larger than the specific size, the encoding apparatus may determine whether the intra prediction mode is an intra prediction mode for the UWP and when it is determined that the intra prediction mode is an intra prediction mode for the UWP, derive the prediction sample of the target sample within the current block by performing the UWP on the current block, based on the intra prediction mode. Meanwhile, the encoding apparatus may generate a PDPC flag that indicates whether the PDPC of the current block is performed. For example, when the value of the PDPC flag is 1, the PDPC flag may indicate that the PDPC is performed on the current block while, when the value of the PDPC flag is 0, the PDPC flag may indicate that the PDPC is not performed on the current block. Also, the specific size may be preconfigured.

As still another example, the encoding apparatus may determine, based on the number of non-zero transform coefficients of the current block, whether the PDPC or the UWP of the current block is performed. More specifically, the encoding apparatus may generate a residual signal that includes transform coefficients of the current block and determine whether the number of non-zero transform coefficients among transform coefficients of the current block is smaller than a specific number. when the number of non-zero transform coefficients is smaller than the specific number, the encoding apparatus may determine whether the PDPC of the current block is performed, and when it is determined that the PDPC is performed on the current block, the encoding apparatus may derive the prediction sample of the target sample within the current block by performing the PDPC based on the intra prediction mode. when the prediction sample of the target sample within the current block is derived by performing the PDPC based on the intra prediction mode, the encoding apparatus may derive filtered reference samples by performing filtering based on a filter for the PDPC, derive a temporary prediction sample of the target sample based on an intra prediction mode of the current block and the filtered reference samples, and derive the prediction sample of the target sample by applying a weighted sum of at least one reference sample derived according to the intra prediction mode among the unfiltered reference samples and the temporary prediction sample. Meanwhile, when the number of non-zero transform coefficients is larger than the specific number, the encoding apparatus may determine whether the intra prediction mode is an intra prediction mode for the UWP and when it is determined that the intra prediction mode is an intra prediction mode for the UWP, derive the prediction sample of the target sample within the current block by performing the UWP on the current block, based on the intra prediction mode. Meanwhile, the encoding apparatus may generate a PDPC flag that indicates whether the PDPC of the current block is performed. For example, when the value of the PDPC flag is 1, the PDPC flag may indicate that the PDPC is performed on the current block while, when the value of the PDPC flag is 0, the PDPC flag may indicate that the PDPC is not performed on the current block. Also, the specific number may be preconfigured.

When the UWP is performed on the current block, the encoding apparatus derives weights for a target sample of the current block S1130. The weights may include a first weight for the first reference sample and a second weight for the second reference sample; and the first and second weights may be derived based on a temporary weight of the target sample. Also, the temporary weight of the target sample may be derived based on the position of the target sample within the current block. For example, the temporary weight of the target sample may be derived based on Eq. 3. When the temporary weight is derived, and the x component of the target sample is smaller than the y component of the target sample, the first and second weights may be derived based on Eq. 4. Also, when the temporary weight is derived and the x component of the target sample is not smaller than the y component of the target sample, the first and second weights may be derived based on Eq. 5. In a different example, the temporary weight of the target sample may be derived based on Eq. 4. When the temporary weight is derived, and the x component of the target sample is smaller than the y component of the target sample, the first and second weights may be derived based on Eq. 4. Also, when the temporary weight is derived and the x component of the target sample is not smaller than the y component of the target sample, the first and second weights may be derived based on Eq. 5.

The encoding apparatus derives reference samples of the target sample according to the intra prediction mode among the reference samples S1140. The encoding apparatus may derive a first reference sample located in a prediction direction of an intra prediction mode of the current block with reference to a target sample (or position of the target sample) of the current block among the reference samples of the current block and a second reference sample located in the opposite direction of a prediction direction of the intra prediction mode of the current block. when the intra prediction mode for the current block is an angular intra prediction mode, reference samples of the target sample may include the first reference sample located in a prediction direction of the intra prediction mode with reference to the target sample and the second reference sample located in the opposite direction of the prediction direction of the intra prediction mode with reference to the target sample.

The encoding apparatus derives a prediction sample of the target sample from a weighted sum of the reference samples of the target sample based on the weights S1150. The weights may include a first weight for the first reference sample and a second weight for the second reference sample. The encoding apparatus may derive the prediction sample of the target sample by using a weighted sum of the first and second reference samples based on the first and second weights.

The encoding apparatus generates prediction information for the current block, encodes the generated prediction information, and outputs the encoded prediction information S 1160. The encoding apparatus may generate prediction information for the current block and signal the generated prediction information through a bitstream. The prediction information may include a PDPC flag that indicates whether PDPC of the current block is performed. Also, the prediction information may include an NSST index that indicates whether NSST of the current block is applied. Also, the prediction information may include a residual signal of the current block.

Although not shown in the figure, the encoding apparatus may generate a residual sample based on an original sample and the derived prediction sample. The encoding apparatus may generate the residual signal based on the residual sample. The residual signal may include transform coefficients related to the residual sample. The encoding apparatus may derive the restored sample based on the prediction sample and the residual sample. In other words, the encoding apparatus may derive the restored sample by adding the prediction sample and the residual sample. Also, the encoding apparatus may encode the residual signal and output the encoded residual signal in the form of a bitstream. The bitstream may be transmitted to a decoding apparatus through a network or a storage medium.

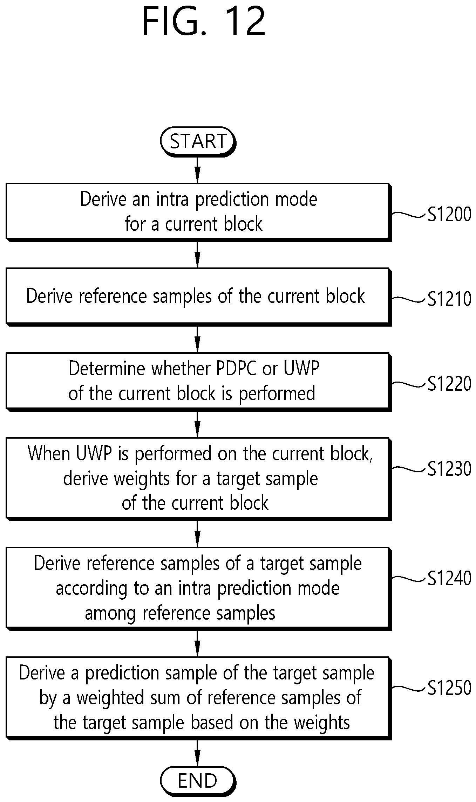

FIG. 12 illustrates a video decoding method by a decoding apparatus according to the present disclosure. The method disclosed in FIG. 12 may be performed by the decoding apparatus disclosed in FIG. 2. More specifically, for example, S1200 to S1250 steps may be performed by the predictor of the decoding apparatus.

The decoding apparatus derives an intra prediction mode for a current block S1200. The decoding apparatus may obtain prediction information for the current block through a bitstream. The prediction information may include information that directly indicates an intra prediction mode for the current block or include information that indicates any one of candidates from an intra prediction mode candidate list derived based on an intra prediction mode of a left or an upper block of the current block. The intra prediction mode candidate list may be referred to as an MPM candidate list. The decoding apparatus may derive an intra prediction mode for the current block based on the obtained prediction information. The intra prediction mode may be any one of two unidirectional prediction modes and 33 angular prediction modes. As described above, the two unidirectional prediction modes may include the intra DC mode and the intra planar mode. Or the intra prediction mode may be any one of two unidirectional intra prediction modes and 65 angular intra prediction modes. As described above, the two unidirectional prediction modes may include the intra DC mode and the intra planar mode. Also, the 65 angular intra prediction modes may include vertical angular intra prediction modes and horizontal angular prediction modes. The vertical angular prediction modes may include the 34-th intra prediction mode to the 66-th intra prediction mode; and the horizontal angular intra prediction modes may include the 2nd intra prediction mode to the 33-th intra prediction mode.

The decoding apparatus derives reference samples of the current block S1210. The decoding apparatus may derive reference samples of the current block. The reference samples may include the left reference samples, the top-left reference sample, and the upper reference samples. The left reference samples, the top-left reference sample, and the upper reference samples may be derived from neighboring blocks already restored when the current block is decoded. 2N upper reference samples, top-left reference sample, and 2N left reference samples of the current block may be derived. Here, when size of the current block is N x N, and the x and y components of the top-left sample of the current block are 0 and 0, the left reference samples may range from p[-1][0] to p[-1][2N-1], the top-left reference sample may be p[-1][-1], and the upper reference samples may range from p[0][-1] to p[2N-1][-1].

Similarly, when size of the current block is M x N, and the x and y components of the top-left sample of the current block are 0 and 0, the M+N upper reference samples, top-left reference sample, and M+N left reference samples of the current block may be derived. When size of the current block is an M x N non-square block, and the x and y components of the top-left sample of the current block are 0 and 0, the left reference samples may range from p[-1][0] to p[-1][M+N-1], the top-left reference sample may be p[-1][-1], and the upper reference samples may range from p[0][-1] to p[M+N-1][-1].

The decoding apparatus may determine whether Position Dependent intra Prediction Combination (PDPC) or Un-equal Weight Prediction (UWP) of the current block is performed S1220. The decoding apparatus may determine, based on various conditions, whether PDPC or UWP is performed on the current block.

As one example, the decoding apparatus may determine, based on an intra prediction mode of the current block, whether Position Dependent intra Prediction Combination (PDPC) or Un-equal Weight Prediction (UWP) of the current block is performed. More specifically, the decoding apparatus may determine whether the intra prediction mode is an intra prediction mode for the UWP. When the intra prediction mode is not an intra prediction mode for the UWP, the decoding apparatus may obtain, through a bitstream, a PDPC flag that indicates whether PDPC of the current block is performed and when the value of the PDPC flag is 1, derive the prediction sample of the target sample within the current block by performing the PDPC based on the intra prediction mode. When the prediction sample of the target sample within the current block is derived by performing the PDPC based on the intra prediction mode, the decoding apparatus may derive filtered reference samples by performing filtering based on a filter for the PDPC, derive a temporary prediction sample of the target sample based on an intra prediction mode of the current block and the filtered reference samples, and derive the prediction sample of the target sample by applying a weighted sum of at least one reference sample derived according to the intra prediction mode among the unfiltered reference samples and the temporary prediction sample. Meanwhile, when the intra prediction mode is an intra prediction mode for the UWP, the decoding apparatus may derive the prediction sample of the target sample within the current block by performing the UWP on the current block based on the intra prediction mode.

As another example, the decoding apparatus may determine whether the PDPC or the UWP of the current block is performed, based on whether non-separable secondary transform (NSST) of the current block is applied. More specifically, the decoding apparatus may obtain, through a bitstream, an NSST index of the current block. The NSST index may indicate whether NNST of the current block is applied. When the value of the NSST index is 0, the NSST index may indicate that NSST is not applied to the current block while, when the value of the NSST index is not zero, the NSST index may indicate that NSST is applied to the current block. When the value of the NSST index is 0, the decoding apparatus may obtain, through the bitstream, a PDPC flag that indicates whether PDPC of the current block is performed and when the value of the PDPC flag is 1, derive the prediction sample of the target sample within the current block by performing the PDPC based on the intra prediction mode. When the prediction sample of the target sample within the current block is derived by performing the PDPC based on the intra prediction mode, the decoding apparatus may derive filtered reference samples by performing filtering based on a filter for the PDPC, derive a temporary prediction sample of the target sample based on an intra prediction mode of the current block and the filtered reference samples, and derive the prediction sample of the target sample by applying a weighted sum of at least one reference sample derived according to the intra prediction mode among the unfiltered reference samples and the temporary prediction sample. Meanwhile, when the value of the NSST index is 1, the decoding apparatus may determine whether the intra prediction mode is an intra prediction mode for the UWP and when it is determined that the intra prediction mode is an intra prediction mode for the UWP, derive the prediction sample of the target sample within the current block by performing the UWP on the current block, based on the intra prediction mode.

As yet another example, the decoding apparatus may determine, based on the size of the current block, whether the PDPC or the UWP of the current block is performed. More specifically, the decoding apparatus may determine whether the size of the current block is smaller than a specific size. The specific size may represent the minimum size to which the PDPC is applied. When the size of the current block is smaller than the specific size, the decoding apparatus may obtain, through the bitstream, a PDPC flag that indicates whether PDPC of the current block is performed and determine whether the PDPC of the current block is performed and when the value of the PDPC flag is 1, may derive the prediction sample of the target sample within the current block by performing the PDPC based on the intra prediction mode. When the prediction sample of the target sample within the current block is derived by performing the PDPC based on the intra prediction mode, the decoding apparatus may derive filtered reference samples by performing filtering based on a filter for the PDPC, derive a temporary prediction sample of the target sample based on an intra prediction mode of the current block and the filtered reference samples, and derive the prediction sample of the target sample by applying a weighted sum of at least one reference sample derived according to the intra prediction mode among the unfiltered reference samples and the temporary prediction sample. Meanwhile, when the size of the current block is larger than the specific size, the decoding apparatus may determine whether the intra prediction mode is an intra prediction mode for the UWP and when it is determined that the intra prediction mode is an intra prediction mode for the UWP, derive the prediction sample of the target sample within the current block by performing the UWP on the current block, based on the intra prediction mode. Meanwhile, the specific size may be preconfigured. In other words, the specific size may be derived based on a preconfigured value.

As still another example, the decoding apparatus may determine, based on the number of non-zero transform coefficients of the current block, whether the PDPC or the UWP of the current block is performed. More specifically, the decoding apparatus may obtain, through a bitstream, a residual signal that includes transform coefficients of the current block and determine whether the number of non-zero transform coefficients among transform coefficients of the current block is smaller than a specific number. When the number of non-zero transform coefficients is smaller than the specific number, the decoding apparatus may obtain, through the bitstream, a PDPC flag that indicates whether PDPC of the current block is performed and when the value of the PDPC flag is 1, derive the prediction sample of the target sample within the current block by performing the PDPC based on the intra prediction mode. When the prediction sample of the target sample within the current block is derived by performing the PDPC based on the intra prediction mode, the encoding apparatus may derive filtered reference samples by performing filtering based on a filter for the PDPC, derive a temporary prediction sample of the target sample based on an intra prediction mode of the current block and the filtered reference samples, and derive the prediction sample of the target sample by applying a weighted sum of at least one reference sample derived according to the intra prediction mode among the unfiltered reference samples and the temporary prediction sample. Meanwhile, when the number of non-zero transform coefficients is larger than the specific number, the decoding apparatus may determine whether the intra prediction mode is an intra prediction mode for the UWP and when it is determined that the intra prediction mode is an intra prediction mode for the UWP, derive the prediction sample of the target sample within the current block by performing the UWP on the current block, based on the intra prediction mode. Meanwhile, the specific number may be preconfigured. In other words, the specific number may be derived based on a preconfigured value.

When the UWP is performed on the current block, the decoding apparatus derives weights for a target sample of the current block S1230. The weights may include a first weight for the first reference sample and a second weight for the second reference sample; and the first and second weights may be derived based on a temporary weight of the target sample. Also, the temporary weight of the target sample may be derived based on the position of the target sample within the current block. For example, the temporary weight of the target sample may be derived based on Eq. 3. When the temporary weight is derived, and the x component of the target sample is smaller than the y component of the target sample, the first and second weights may be derived based on Eq. 4. Also, when the temporary weight is derived and the x component of the target sample is not smaller than the y component of the target sample, the first and second weights may be derived based on Eq. 5. In a different example, the temporary weight of the target sample may be derived based on Eq. 4. When the temporary weight is derived, and the x component of the target sample is smaller than the y component of the target sample, the first and second weights may be derived based on Eq. 4. Also, when the temporary weight is derived and the x component of the target sample is not smaller than the y component of the target sample, the first and second weights may be derived based on Eq. 5.

The decoding apparatus derives reference samples of the target sample according to the intra prediction mode among the reference samples S1240. The decoding apparatus may derive a first reference sample located in a prediction direction of an intra prediction mode of the current block with reference to a target sample (or position of the target sample) of the current block among the reference samples of the current block and a second reference sample located in the opposite direction of a prediction direction of the intra prediction mode of the current block. When the intra prediction mode for the current block is an angular intra prediction mode, reference samples of the target sample may include the first reference sample located in a prediction direction of the intra prediction mode with reference to the target sample and the second reference sample located in the opposite direction of the prediction direction of the intra prediction mode with reference to the target sample.

The decoding apparatus derives a prediction sample of the target sample from a weighted sum of the reference samples of the target sample based on the weights S1250. The weights may include a first weight for the first reference sample and a second weight for the second reference sample. The decoding apparatus may derive the prediction sample of the target sample by using a weighted sum of the first and second reference samples based on the first and second weights.

Meanwhile, although not shown in the figure, the decoding apparatus may generate a restored sample based on the prediction sample. The decoding apparatus may obtain a residual signal of the current block from the bitstream. The residual signal may include transform coefficients for a residual sample. The decoding apparatus may derive the residual sample (or a residual sample array) for the current block based on the residual signal. In this case, the decoding apparatus may generate the restored sample based on the prediction sample and the residual sample.

The decoding apparatus may derive a restored block or a restored picture based on the restored sample. Afterwards, as described above, the decoding apparatus may apply deblocking filtering and/or an in-loop filtering procedure such as the SAO procedure to the restored picture to improve subjective/objective image quality depending on the needs.

Also, the decoding apparatus may receive prediction information about the current block through a bitstream and perform entropy decoding on the received prediction information. In other words, the decoding apparatus may obtain prediction information of the current block through the bitstream. The prediction information may include the PDPC flag that indicates whether PDPC of the current block is performed. Also, the prediction information may include a residual signal of the current block. Also, the prediction information may include an NSST index that indicates whether NSST of the current block is applied.

According to the present disclosure, weights for intra prediction may be generated based on the position of a target sample, which reduces the amount of memory used for storing a table for generating weights.

According to the present disclosure, intra prediction that applies UWP and PDPC selectively based on a specific condition may be performed, which improves intra prediction efficiency and the overall coding efficiency.

In the above-described embodiment, the methods are described based on the flowchart having a series of steps or blocks. The present disclosure is not limited to the order of the above steps or blocks. Some steps or blocks may occur simultaneously or in a different order from other steps or blocks as described above. Further, those skilled in the art will understand that the steps shown in the above flowchart are not exclusive, that further steps may be included, or that one or more steps in the flowchart may be deleted without affecting the scope of the present disclosure.

The method according to the present disclosure described above may be implemented in software. The encoding device and/or decoding device according to the present disclosure may be included in a device that performs image processing, for example, for a TV, a computer, a smart phone, a set-top box, or a display device.

When the embodiments of the present disclosure are implemented in software, the above-described method may be implemented by modules (processes, functions, and so on) that perform the functions described above. Such modules may be stored in memory and executed by a processor. The memory may be internal or external to the processor, and the memory may be coupled to the processor using various well known means. The processor may comprise an application-specific integrated circuit (ASIC), other chipsets, a logic circuit and/or a data processing device. The memory may include a read-only memory (ROM), a random access memory (RAM), a flash memory, a memory card, a storage medium, and/or other storage device.

**Claims**

1. An intra prediction method performed by a decoding apparatus, the method comprising:

    deriving an intra prediction mode for a current block;
    deriving reference samples of the current block;
    determining whether a Position Dependent intra Prediction combination (PDPC) or an Un-equal Weight Prediction UWP of the current block is performed;
    deriving weights for a target sample of the current block when the UWP is performed on the current block;
    deriving reference samples of the target sample among the reference samples according to the intra prediction mode; and
    deriving a prediction sample of the target sample by weighted summing the reference samples of the target sample based on the weights.

2. The method of claim 1, wherein, when the intra prediction mode of the current block is an angular intra prediction mode, the reference samples of the target sample include a first reference sample located in a prediction direction of the intra prediction mode with reference to the target sample and a second reference sample located in the opposite direction of the prediction direction of the intra prediction mode with reference to the target sample.

3. The method of claim 2, wherein the weights include a first weight for the first reference sample and a second weight for the second reference sample;
   the first weight and the second weight are derived based on a temporary weight of the target sample; and
   the temporary weight of the target sample is derived based on a position of the target sample within the current block.

4. The method of claim 3, wherein the temporary weight of the target sample is derived by a following equation:

$$\text{weight}[x][y] = ((1 \ll 10))/ (x + y + 2))$$,

   where weight[x][y] represents the temporary weight; and x and y represent x and y components of the target sample when x and y components of a top-left sample of the current block are 0 and 0.

5. The method of claim 4, wherein, when the x component of the target sample is smaller than the y component of the target sample, the first weight and the second weight are derived based on a following equation:

$$\text{First Weight} = (x+1)*\text{weight}[x][y]$$

$$\text{Second Weight} = (1 \ll 10) - \text{First Weight}$$,

   and when the x component of the target sample is not smaller than the y component of the target sample, the first weight and the second weight are derived based on a following equation:

$$\text{Second Weight} = (x+1)*\text{weight}[x][y]$$

$$\text{First Weight} = (1 \ll 10) - \text{Second Weight} \text{,}$$

where weight[x] [y] represents the temporary weight; and x and y represent the x and y components of the target sample when the x and y components of a top-left sample of the current block are 0 and 0.

6. The method of claim 3, wherein the temporary weight of the target sample is derived based on a following equation:

$$\text{weight}[x][y] = ((1 \ll 10) + ((x + y + 2) \gg 1))/ (x + y + 2)) \text{,}$$

where weight[x][y] represents the temporary weight; and x and y represent x and y components of the target sample when x and y components of a top-left sample of the current block are 0 and 0.

7. The method of claim 1, wherein the determining whether the PDPC or the UWP of the current block is performed includes
determining whether the intra prediction mode is an intra prediction mode for the UWP;
when the intra prediction mode is not the intra prediction mode for the UWP, obtaining, through a bitstream, a PDPC flag that indicates whether the PDPC of the current block is performed; and
when a value of the PDPC flag is 1, deriving the prediction sample of the target sample within the current block by performing the PDPC based on the intra prediction mode.

8. The method of claim 7, wherein the deriving the prediction sample of the target sample within the current block by performing the PDPC based on the intra prediction mode includes
deriving filtered reference samples by performing filtering based on a filter for the PDPC;
deriving a temporary prediction sample of the target sample based on the intra prediction mode of the current block and the filtered reference samples; and
deriving the prediction sample of the target sample by a weighted sum of at least one reference sample derived according to the intra prediction mode among the unfiltered reference samples and the temporary prediction sample.

9. The method of claim 1, wherein the determining whether the PDPC or the UWP of the current block is performed may include
obtaining a non-separable secondary transform (NSST) index of the current block through a bitstream;
when a value of the NSST index is 0, obtaining, through the bitstream, a PDPC flag that indicates whether the PDPC of the current block is performed; and
when a value of the PDPC flag is 1, deriving the prediction sample of the target sample within the current block by performing the PDPC based on the intra prediction mode.

10. The method of claim 9, further comprising,
when the value of the NSST index is 1, determining whether the intra prediction mode is an intra prediction mode for the UWP; and
when the intra prediction mode is the intra prediction mode for the UWP, performing the UWP on the current block based on the intra prediction mode.

11. The method of claim 1, wherein the determining whether the PDPC or the UWP of the current block is performed includes
determining whether a size of the current block is smaller than a specific size;
when the size of the current block is smaller than the specific size, obtaining, through the bitstream, a PDPC flag that indicates whether the PDPC of the current block is performed; and
when a value of the PDPC flag is 1, deriving the prediction sample of the target sample within the current block by performing the PDPC based on the intra prediction mode.

12. The method of claim 1, wherein the determining whether the PDPC or the UWP of the current block is performed includes
obtaining, through a bitstream, a residual signal including transform coefficients of the current block;

determining whether a number of non-zero transform coefficients among transform coefficients of the current block is smaller than a specific number;

when the number of non-zero transform coefficients is smaller than the specific number, obtaining, through the bitstream, a PDPC flag that indicates whether the PDPC of the current block is performed; and

when a value of the PDPC flag is 1, deriving the prediction sample of the target sample within the current block by performing the PDPC based on the intra prediction mode.

13. A video decoding apparatus performing an intra prediction, comprising:

an entropy decoder for obtaining prediction information for a current block; and

a predictor for deriving an intra prediction mode for the current block, for deriving reference samples of the current block, for determining whether a Position Dependent intra Prediction combination (PDPC) or an Un-equal Weight Prediction UWP of the current block is performed, for deriving weights for a target sample of the current block when the UWP is performed on the current block, for deriving reference samples of the target sample among the reference samples according to the intra prediction mode, and for deriving a prediction sample of the target sample by weighted summing the reference samples of the target sample based on the weights.

14. The apparatus of claim 13, wherein, when the intra prediction mode for the current block is an angular intra prediction mode, the reference samples of the target sample include a first reference sample located in a prediction direction of the intra prediction mode with reference to the target sample and a second reference sample located in the opposite direction of the prediction direction of the intra prediction mode with reference to the target sample; and the weights include a first weight for the first reference sample and a second weight for the second reference sample, wherein the first weight and the second weight are derived based on a temporary weight of the target sample, and the temporary weight of the target sample is derived based on a position of the target sample within the current block.

15. The apparatus of claim 12, wherein the predictor determines whether the intra prediction mode is an intra prediction mode for the UWP; when the intra prediction mode is not the intra prediction mode for the UWP, determines whether the PDPC of the current block is performed based on a PDPC flag of the current block; and when a value of the PDPC flag is 1, derives the prediction sample of the target sample within the current block by performing the PDPC based on the intra prediction mode, wherein the prediction information includes the PDPC flag that indicates whether the PDPC of the current block is performed.

# FIG. 1

EP 3 627 836 A1

# FIG. 2

EP 3 627 836 A1

# FIG. 3

Upper reference sample

Left reference sample

# FIG. 4

FIG. 5

EP 3 627 836 A1

# FIG. 6

UWP

S600: X-pos<Y-pos in block

YES → S610: VericalWeight=(x+1)*weightForUWP[x+y+2]
HorizontalWeight=(1<<10)-VerticalWeight

NO → S620: HorizontalWeight=(x+1)*weightForUWP[x+y+2]
VerticalWeight=(1<<10)-HorizontalWeight

S630: Predictor[x][y]=(refmain*VerticalWeight
+refside*HorizontalWeight)/(1<<10)

UWP

EP 3 627 836 A1

FIG. 7

# FIG. 8

Intra prediction

Determine whether
a current intra prediction mode is
an intra prediction mode
for UWP — S800

NO → Parse a PDPC flag — S810

YES → Generate a prediction sample by applying UWP — S850

Is the value
of the PDPC flag is 1? — S820

NO → Generate a prediction sample through conventional intra prediction — S840

YES → Generate a prediction sample by applying PDPC — S830

END

EP 3 627 836 A1

# FIG. 9

Intra prediction

↓

S900 — Determine whether the value of an NSST index is 0

— YES → S950 — Determine whether a current intra prediction mode is an intra prediction mode for UWP

NSST index S900 NO → Parse a PDPC flag (S910)

↓

S920 — Is the value of the PDPC flag is 1?

— NO → S940 — Generate a prediction sample through conventional intra prediction

YES → S930 — Generate a prediction sample by applying PDPC

S950 NO → S940

S950 YES → S960 — Generate a prediction sample by applying UWP

↓

END

EP 3 627 836 A1

# FIG. 10

Intra prediction

S1000 — Determine whether PDPC of a current block is applied

YES → S1010 — Parse a PDPC flag

S1020 — Is the value of the PDPC flag is 1?

YES → S1030 — Generate a prediction sample by applying PDPC → END

NO → S1040 — Generate a prediction sample through conventional intra prediction

S1000 NO → S1050 — Determine whether a current intra prediction mode is an intra prediction mode for UWP

YES → S1060 — Generate a prediction sample by applying UWP

NO → S1040 — Generate a prediction sample through conventional intra prediction

# FIG. 11

```
                    ( START )
                        │
                        ▼
        ┌─────────────────────────────────┐
        │  Determine an intra prediction mode │ ──S1100
        │       for a current block        │
        └─────────────────────────────────┘
                        │
                        ▼
        ┌─────────────────────────────────┐
        │ Derive reference samples of the current block │ ──S1110
        └─────────────────────────────────┘
                        │
                        ▼
        ┌─────────────────────────────────┐
        │   Determine whether PDPC or UWP   │ ──S1120
        │   of the current block is performed │
        └─────────────────────────────────┘
                        │
                        ▼
        ┌─────────────────────────────────┐
        │ When UWP is performed on the current block, │ ──S1130
        │     derive weights for a target sample    │
        │          of the current block          │
        └─────────────────────────────────┘
                        │
                        ▼
        ┌─────────────────────────────────┐
        │        Derive reference samples of         │ ──S1140
        │    a target sample according to an intra    │
        │  prediction mode among reference samples   │
        └─────────────────────────────────┘
                        │
                        ▼
        ┌─────────────────────────────────┐
        │   Derive a prediction sample of the target   │ ──S1150
        │ sample by a weighted sum of reference samples │
        │   of the target sample based on the weights   │
        └─────────────────────────────────┘
                        │
                        ▼
        ┌─────────────────────────────────┐
        │       Generate prediction information       │ ──S1160
        │   for the current block, encode the generated  │
        │             prediction information,           │
        │ and output the encoded prediction information │
        └─────────────────────────────────┘
                        │
                        ▼
                    ( END )
```

# FIG. 12

```
          ( START )
              │
              ▼
┌──────────────────────────────┐
│   Derive an intra prediction  │      ~S1200
│       mode for a current block│
└──────────────────────────────┘
              │
              ▼
┌──────────────────────────────┐
│ Derive reference samples of   │      ~S1210
│     the current block         │
└──────────────────────────────┘
              │
              ▼
┌──────────────────────────────┐
│  Determine whether PDPC or UWP│      ~S1220
│   of the current block is     │
│         performed             │
└──────────────────────────────┘
              │
              ▼
┌──────────────────────────────┐
│ When UWP is performed on the  │      ~S1230
│ current block, derive weights │
│  for a target sample of the   │
│        current block          │
└──────────────────────────────┘
              │
              ▼
┌──────────────────────────────┐
│ Derive reference samples of a │      ~S1240
│ target sample according to an │
│  intra prediction mode among  │
│      reference samples        │
└──────────────────────────────┘
              │
              ▼
┌──────────────────────────────┐
│ Derive a prediction sample of │      ~S1250
│ the target sample by a weighted│
│  sum of reference samples of  │
│ the target sample based on the│
│          weights              │
└──────────────────────────────┘
              │
              ▼
           ( END )
```

## INTERNATIONAL SEARCH REPORT

| International application No. |
| --- |
| **PCT/KR2018/005438** |

**A. CLASSIFICATION OF SUBJECT MATTER**

*H04N 19/11(2014.01)i, H04N 19/593(2014.01)i, H04N 19/105(2014.01)i, H04N 19/176(2014.01)i, H04N 19/70(2014.01)i*

According to International Patent Classification (IPC) or to both national classification and IPC

**B. FIELDS SEARCHED**

Minimum documentation searched (classification system followed by classification symbols)
H04N 19/11; H04N 11/04; H04N 7/32; H04N 19/159; H04N 19/59; H04N 1/32; H04N 11/02; H04N 19/147; H04N 19/61; H04N 19/593; H04N 19/105; H04N 19/176; H04N 19/70

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: decoding, pdpc, uwp, reference, sample, intra, prediction

**C. DOCUMENTS CONSIDERED TO BE RELEVANT**

| Category* | Citation of document, with indication, where appropriate, of the relevant passages | Relevant to claim No. |
| --- | --- | --- |
| Y | US 2009-0257492 A1 (ANDERSSON, Kenneth et al.) 15 October 2009<br>See paragraphs [0034]-[0043], [0075], [0099]; claim 1; and figure 14. | 1-15 |
| Y | US 2017-0094285 A1 (QUALCOMM INCORPORATED) 30 March 2017<br>See paragraphs [0035], [0049], [0072], [0078], [0105], [0121]-[0127]; claim 1; and figures 3, 4, 7, 9. | 1-15 |
| Y | US 2017-0094313 A1 (QUALCOMM INCORPORATED) 30 March 2017<br>See paragraphs [0045], [0148], [0172], [0173]; and figures 10B, 11. | 9,10,12 |
| A | KR 10-1663235 B1 (KOREA ADVANCED INSTITUTE OF SCIENCE AND TECHNOLOGY) 06 October 2016<br>See paragraphs [0014]-[0058]; claims 1-9; and figure 1. | 1-15 |
| A | US 2006-0182174 A1 (KUO, Chi-Chang) 17 August 2006<br>See paragraphs [0057]-[0065]; claims 1-10; and figure 3. | 1-15 |

| ☐ Further documents are listed in the continuation of Box C. | ☒ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 AUGUST 2018 (16.08.2018) | **16 AUGUST 2018 (16.08.2018)** |

| Name and mailing address of the ISA/KR | Authorized officer |
| --- | --- |
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/005438**

| Patent document cited in search report | Publication date | Patent family member | Publication date |
|---|---|---|---|
| US 2009-0257492 A1 | 15/10/2009 | CA 2655970 A1 | 10/01/2008 |
| | | CN 101491107 A | 22/07/2009 |
| | | CN 101491107 B | 18/07/2012 |
| | | EP 2039171 A1 | 25/03/2009 |
| | | EP 2039171 B1 | 05/10/2016 |
| | | US 8457200 B2 | 04/06/2013 |
| | | WO 2008-004940 A1 | 10/01/2008 |
| US 2017-0094285 A1 | 30/03/2017 | CA 3000373 A1 | 06/04/2017 |
| | | KR 10-2018-0063201 A | 11/06/2018 |
| | | TW 201729595 A | 16/08/2017 |
| | | WO 2017-058635 A1 | 06/04/2017 |
| US 2017-0094313 A1 | 30/03/2017 | AU 2016-332317 A1 | 26/04/2018 |
| | | AU 2016-332318 A1 | 26/04/2018 |
| | | KR 10-2018-0063186 A | 11/06/2018 |
| | | KR 10-2018-0063187 A | 11/06/2018 |
| | | TW 201715888 A | 01/05/2017 |
| | | TW 201722152 A | 16/06/2017 |
| | | US 2017-0094314 A1 | 30/03/2017 |
| | | WO 2017-058614 A1 | 06/04/2017 |
| | | WO 2017-058615 A1 | 06/04/2017 |
| KR 10-1663235 B1 | 06/10/2016 | NONE | |
| US 2006-0182174 A1 | 17/08/2006 | JP 2006-229927 A | 31/08/2006 |
| | | JP 4555758 B2 | 06/10/2010 |
| | | TW 200629906 A | 16/08/2006 |
| | | TW 265737 B | 01/11/2006 |
| | | TW I265737 B | 01/11/2006 |
| | | US 7706442 B2 | 27/04/2010 |

Form PCT/ISA/210 (patent family annex) (January 2015)